# EUROPEAN PATENT APPLICATION

(11) **EP 4 316 973 A1**
(43) Date of publication of application: **07.02.2024**
(21) Application number: 22893090.5
(22) Date of filing: 28.10.2022
(51) Int. Cl.: B63B 25/28, B63B 25/24, B65G 67/60

(54) **AUXILIARY CONTAINER LOADING APPARATUS, CONTAINER CARRIER COMPRISING SAME, AND CONTAINER UNLOADING METHOD**

(30) Priority: 11.11.2021 KR 20210154917; 22.04.2022 KR 20220050402; 28.06.2022 KR 20220079037
(71) Applicant: Hyundai Heavy Industries Co., Ltd., Ulsan 44032 (KR)
(72) Inventor: IM, Hong Il, Ulsan 44032 (KR); JANG, Young Jae, Ulsan 44032 (KR); LIM, Woo Ram, Ulsan 44032 (KR); KIM, Chang Beom, Ulsan 44032 (KR); HAN, Dong Hwa, Ulsan 44032 (KR)
(74) Representative: Betten & Resch
(86) International application number: PCT/KR2022/016757
(87) International publication number: WO 2023/085668

(57) **Abstract**

A container carrier of the present disclosure includes a hull comprising a side plating forming a double hull structure with an outer side plating and an inner side plating, a bottom plating forming a double bottom structure with an outer bottom plating and an inner bottom plating, and an upper deck; a cargo hold partitioned by transverse bulkheads inside the hull; lower cell guides installed at regular intervals on sides of the transverse bulkheads; top bridges installed extending to left and right edges of the upper deck between the cargo holds and disposed in a plurality of rows in a longitudinal direction of the hull; and upper cell guides installed on both sides of the top bridge, each of the upper cell guides being connected to each of the lower cell guides to be integrally formed.

## Description

### TECHNICAL FIELD

The present disclosure relates to a container stacking assistance device, a container carrier having the same, and a method of loading and unloading container.

### BACKGROUND ART

Container carriers are gradually increasing container loading capacity, and at the same time as the increase in shipping capacity, securing the stability of containers shipped during operation is attracting attention as an important factor.

Such a container carrier loads a container through a structure called a cell guide on a cargo hold prepared in the front-rear direction from the inside of the hull, mounts a hatch cover on the hatch coaming installed at the entrance of the cargo hold on the upper deck of the hull, and then loads the container in multiple tiers on the hatch cover. The container loaded on the hatch cover is lashing using various fittings on a lashing bridge located at the upper part of the space between the cargo holds to prevent it from falling.

The hatch cover not only performs the function of supporting the load of the container loaded on the upper part of the upper deck and blocking the inflow of foreign substances (seawater, rainfall, etc.) into the cargo hold, but also contributes to the reinforcement of the longitudinal strength of the container carrier.

However, the hatch cover is not only inconvenient to produce/transport/mount due to its high weight, but also because it is necessary to additionally provide a structure for installation at the entrance of the cargo hold, it takes up a lot of space between neighboring cargo holds, and the container cannot be loaded as much as that space.

Recently, research has been conducted on a small container carrier with an open-top concept without a hatch cover to solve the problem of production/transport/mounting of hatch covers while shipping more containers.

When applying the open-top concept to a small container carrier, due to the problem of damage to the loading lower container due to the load of the loaded containers and the trim & stability of the ship, the number (tiers) of containers continuously loaded from the bottom of the cargo hold to the upper part of the upper deck must be limited to a certain number (for example, 12 steps) or less, and there is a problem in that the side plating must be excessively increased compared to a container carrier of the same shipping size and the strength of the hull must be reinforced in order to prevent green water in which a large amount of seawater flows into the deck of a ship in rough seas during ship operation.

In large container carriers, in order to prevent the container loaded on the upper part of the hatch cover from falling, it is necessary to lash/dismantle the container on the upper part of the hatch cover with various fittings on the lashing bridge when loading and unloading the container, and most of it is done manually by the operator, and excessive working time and safety management are required, which is incurred as a cost for container carrier operation. In addition, when excessive hull motion occurs due to bad weather during operation of the container carrier, due to imperfect elements of the hatch cover and lashing system, such as a motion of the hatch cover due to load, breakage of the fastening device of the deck or hatch cover, breakage of fittings of the lashing bridge, or occurrence of relative displacement of the hatch cover and the hull, a problem that the lashing system continuously collapses and finally the loaded container is damaged or lost to the sea is occurring.

### DISCLOSURE

### TECHNICAL PROBLEM

The present disclosure was made to solve the problems of the related art as described above, and embodiments provide a container stacking assistance device that increases the loading capacity by increasing the number (tiers) of containers continuously loaded from the bottom of the cargo hold to an upper part of an upper deck in a large container carrier without a hatch cover and does not require a fitting operation between the container to be loaded and a lashing bridge to prevent the loaded container from tipping over, a container carrier having the same, and a method of loading and unloading container.

### TECHNICAL SOLUTION

In accordance with an aspect of the present disclosure, there is provided a container carrier including: a hull including a side plating forming a double hull structure with an outer side plating and an inner side plating, a bottom plating forming a double bottom structure with an outer bottom plating and an inner bottom plating, and an upper deck; a cargo hold partitioned by transverse bulkheads inside the hull; lower cell guides installed at regular intervals on sides of the transverse bulkheads; top bridges installed extending to left and right edges of the upper deck between the cargo holds and disposed in a plurality of rows in a longitudinal direction of the hull; and upper cell guides installed on both sides of the top bridge, each of the upper cell guides being connected to each of the lower cell guides to be integrally formed.

Specifically, the upper cell guide may be installed up to an uppermost part of the top bridge, or installed lower or higher than the uppermost part.

Specifically, at least one of a lashing eye, a lashing ring, a lashing plate, a plug, and a cone, which are fixing devices of a lashing system, may be additionally disposed at the uppermost part of the top bridge.

Specifically, the top bridge may include a combination of a plurality of vertical members and a plurality of horizontal members, two outer vertical members of the plurality of vertical members disposed on the upper deck on each of left and right sides of the hull may be disposed at an interval corresponding to a width of a small container or a large container, and a plurality of intermediate vertical members disposed between the outer vertical members of the plurality of vertical members may be disposed at intervals corresponding to twice the width of the small container or the large container.

Specifically, the top bridge may further include a plurality of oblique members installed to reduce a load applied to the plurality of vertical members and the plurality of horizontal members, and the plurality of oblique members may be installed with an upward slope in a center direction of the hull from a lower end of each of the two outer vertical members disposed on the upper deck on each of the left and right sides of the hull and a lower end of at least one intermediate vertical member of the plurality of intermediate vertical members.

Specifically, the top bridge may further include a plurality of plate members installed to reduce a load applied to the plurality of vertical members and the plurality of horizontal members, and the plurality of plate members may be installed between one intermediate vertical member adjacent to each of the outer vertical members among the plurality of intermediate vertical members, and between two intermediate vertical members disposed in a center part of the hull among the plurality of intermediate vertical members, respectively.

Specifically, the upper cell guides may be disposed between each of the outer vertical members, the plurality of intermediate vertical members, and the plurality of intermediate vertical members, and configured to guide ascent and descent of the small container or the large container.

Specifically, the container carrier may further include a drainage hole installed through the side plating of the double hull structure to an outside on a freeboard deck so that water is drained from a dock to the outside.

Specifically, the container carrier may further include a drainage system installed on the bottom plating, to drain water infiltrating through an entrance of the cargo hold to an outside, and the drainage system may be configured to collect water entering through a drainage hole formed in the inner bottom plating in a bilge well formed in a box shape under the inner bottom plating at lower ends of left and right sides of the transverse bulkhead, and drain the water collected in the bilge well by a bilge pump of an engine room through a drainage pipe of a pipe duct.

Specifically, the container carrier may further include a container stacking assistance device applied to at least any one of the cargo hold so that a container having at least one or more specifications is loaded on its upper side; and a location adjusting member disposed in a horizontal direction between the neighboring lower cell guides in each of a plurality of cells inside the cargo hold, and installed in at least one or more places at an arbitrary location in a vertical direction of the transverse bulkhead partitioning the cargo hold.

Specifically, the container stacking assistance device may include a frame having a width and length of 1 to n times (n is a natural number) to a width and length of the container, while having a flat cross section smaller than an entrance of the cargo hold; a support provided in a height direction on the frame; and a protruding member protruding to an outward direction from the frame or the support so as to be capable of being mounted at an arbitrary location of the cargo hold, the upper deck of the entrance of the cargo hold may have a groove through which the protruding member passes at a portion where the protruding member is mounted, and the location adjusting member may mount the container stacking assistance device passing through the groove formed in the upper deck and descended inside the cargo hold.

Specifically, the container carrier may further include support structures disposed at predetermined intervals on a bottom surface of the cargo hold to support the container upwardly and spaced apart, and the support structures may allow a flow path for foreign substances flowing into the cargo hold to be formed, between the bottom surface of the cargo hold and the container of a lowermost layer.

In accordance with another aspect of the present disclosure, there is provided a method of loading and unloading container for a container carrier in which a container stacking assistance device including a frame having a width and length of 1 to n times (n is a natural number) to a width and length of a container, while having a flat cross section smaller than an entrance of a cargo hold, a support provided in a height direction on the frame, and a protruding member protruding to an outward direction from the frame or the support so as to be capable of being mounted at an arbitrary location of the cargo hold, is applied to at least one of the cargo hold to load the container, including: by performing an operation of loading the container into the cargo hold by using a crane, completing the loading of the container into the cargo hold; by performing an operation of mounting the container stacking assistance device on an upper deck of an entrance of the cargo hold using the crane, covering the entrance of the cargo hold with the container stacking assistance device; by performing an operation of loading the container on an upper part of the container stacking assistance device using the crane, completing the loading of the container on the upper part of the container stacking assistance device; performing an operation of unloading the container loaded on the upper part of the container stacking assistance device using the crane; by performing an operation of removing the container stacking assistance device from the entrance of the cargo hold using the crane, opening the entrance of the cargo hold; and performing an operation of unloading the container loaded inside the cargo hold using the crane.

Specifically, the mounting of the container stacking assistance device on the upper deck of the entrance of the cargo hold using the crane may include transporting the container stacking assistance device to the cargo hold of the container carrier using the crane in a state where it is stored on land, or to the cargo hold of the container carrier using the crane in a state where it is stored at an arbitrary place of the upper deck of the container carrier, and the performing of the operation of removing the container stacking assistance device from the entrance of the cargo hold using the crane may include unloading the container stacking assistance device onto land or transporting the container stacking assistance device to the arbitrary place of the upper deck.

Specifically, the container carrier may include a hull, an exterior of the hull being formed by the upper deck, a side plating, and a bottom plating; cargo holds partitioned by transverse bulkheads inside the hull; lower cell guides installed at regular intervals on sides of the transverse bulkheads; a plurality of top bridges installed extending to left and right edges of the upper deck between the cargo holds and disposed in a longitudinal direction of the hull; and upper cell guides connected to each of the lower cell guides, and installed on both sides of the top bridge, and the container stacking assistance device may be stowed and stored between the top bridges facing in a front-rear direction on the upper deck in the opening of the entrance of the cargo hold.

Specifically, the method of loading and unloading container may further include, after the completing of the loading of the container into the cargo hold by performing the operation of loading the container into the cargo hold by using the crane, connecting the container stacking assistance devices in parallel using a coupling member; and transporting the container stacking assistance devices in a state where the container stacking assistance devices are connected in parallel using the crane.

Specifically, in the connecting of the container stacking assistance devices in parallel using the coupling member, the number of the container stacking assistance devices connected in parallel may be an odd number to align a center of gravity when transporting them by the crane, and the center of gravity may be aligned during transport by connecting a spreader attached to the crane to a container stacking assistance device located in a center among the odd number of connected container stacking assistance devices.

Specifically, the container carrier may include a hull, an exterior of the hull being formed by the upper deck, a side plating, and a bottom plating; a plurality of top bridges installed extending to left and right edges of the upper deck between the cargo holds and disposed in a longitudinal direction of the hull; and upper cell guides connected to respective lower cell guides in the cargo hold, and installed on both sides of the top bridge, and the upper cell guides may mount the container stacking assistance devices on the upper deck of the entrance of the cargo hold using the crane in a state in which the container stacking assistance devices are connected in parallel using the coupling member, or may be inserted into gaps between the container stacking assistance devices connected in parallel to guide ascent and descent when they are removed from the entrance of the cargo hold.

In accordance with another aspect of the present disclosure, there is provided a container carrier that loads and unloads the container, and mounts the container stacking assistance device on the upper deck of the entrance of the cargo hold, or removes the container stacking assistance device from the entrance of the cargo hold according to the method of loading and unloading container as described above.

### ADVANTAGEOUS EFFECTS

A container stacking assistance device, a container carrier having the same, and a method of loading and unloading container according to the present disclosure may increase the number (tiers) of containers continuously loaded from the bottom of the cargo hold to the upper part of the upper deck in a large container carrier without a hatch cover to increase the shipping capacity, and eliminate fitting work between the container to be loaded and the lashing bridge, thereby reducing time and cost due to excessive fitting work.

### BRIEF DESCRIPTION OF THE DRAWINGS

FIG. 1 is a longitudinal section of a container carrier in accordance with an embodiment of the present disclosure.
FIG. 2 is a partial cross-sectional view of a container carrier in accordance with an embodiment of the present disclosure.
FIGS. 3 to 7 are diagrams for illustrating a container carrier and an open-type container stacking assistance device provided therein in accordance with an embodiment of the present disclosure.
FIGS. 8 to 12 are diagrams for illustrating a container carrier and a closed-type container stacking assistance device provided therein in accordance with an embodiment of the present disclosure.
FIG. 13 is a three-dimensional frontal perspective view for illustrating a container carrier in accordance with an embodiment of the present disclosure.
FIG. 14 is a diagram for illustrating a hull of a container carrier in accordance with an embodiment of the present disclosure.
FIG. 15 is a diagram for illustrating a support structure installed at a bottom of a cargo hold to support a container in a container carrier in accordance with an embodiment of the present disclosure.
FIG. 16 is a diagram for illustrating a drainage system installed at a bottom of a cargo hold in a container carrier in accordance with an embodiment of the present disclosure.
FIG. 17 is a diagram for illustrating an open-type container stacking assistance device of the present disclosure.
FIG. 18 is a diagram for illustrating a closed-type container stacking assistance device of the present disclosure.
FIG. 19 is a diagram for illustrating a connection structure between open-type container stacking assistance devices of the present disclosure.
FIG. 20 is a diagram for illustrating a state in which a container stacking assistance device is stowed in a transport vehicle of the present disclosure.
FIG. 21 is a diagram for illustrating a state in which a container stacking assistance device is stowed on a container carrier of the present disclosure.
FIGS. 22 to 26 are diagrams for illustrating various location adjusting members for adjusting installation location of a container stacking assistance device of the present disclosure.
FIGS. 27A and 27B are diagrams illustrating structural analysis for oblique or vertical and horizontal members constituting a top bridge.
FIG. 28 is a diagram illustrating another embodiment of the top bridge of FIG. 3 obtained through the structural analysis of FIG. 27.
FIG. 29 is a diagram illustrating another embodiment of the top bridge of FIG. 3 obtained through the structural analysis of FIG. 27.
FIGS. 30 and 31 are diagrams for comparing a loading stability of a container in a conventional lashing system and a cell guide system of the present disclosure.
FIGS. 32 to 34 are tables for comparing a loading stability of a container in a conventional lashing system and a cell guide system of the present disclosure.
FIG. 35 is a diagram for illustrating a method of loading and unloading container using a container stacking assistance device in a container carrier in accordance with an embodiment of the present disclosure.
FIG. 36 is a flowchart for illustrating a method of loading and unloading container using a container stacking assistance device in a container carrier in accordance with an embodiment of the present disclosure.
FIG. 37 is another flowchart for illustrating a method of loading and unloading container using a container stacking assistance device in a container carrier in accordance with an embodiment of the present disclosure.
FIG. 38 is a perspective view illustrating another embodiment of the container stacking assistance device of FIGS. 17 to 19.
FIG. 39 is a plan view for illustrating a container stacking assistance device in accordance with another embodiment of the present disclosure.

### DETAILED DESCRIPTION

The object, specific advantages and novel features of the present disclosure will be further apparent from the following detailed description and preferred embodiments associated with the accompanying drawings. In adding reference numbers to the components of each drawing herein, it should be noted that only the same components are to have the same number as much as possible, even if they are displayed on different drawings. In addition, in describing the present disclosure, when it is determined that the detailed description of the related known technology may unnecessarily obscure the subject matter of the present disclosure, the detailed description thereof will be omitted.

Hereinafter, with reference to the accompanying drawings, a preferred embodiment of the present disclosure will be described in detail.

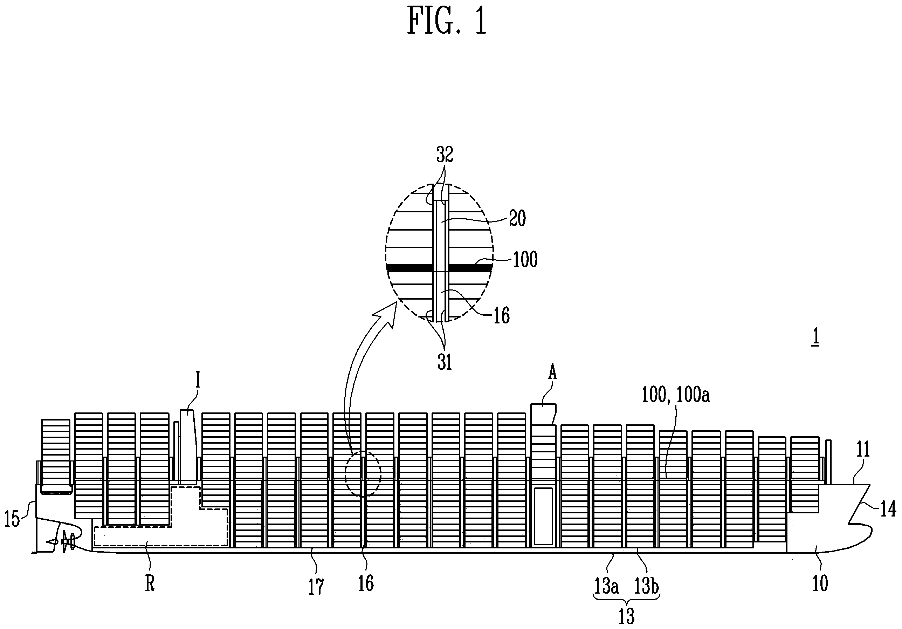

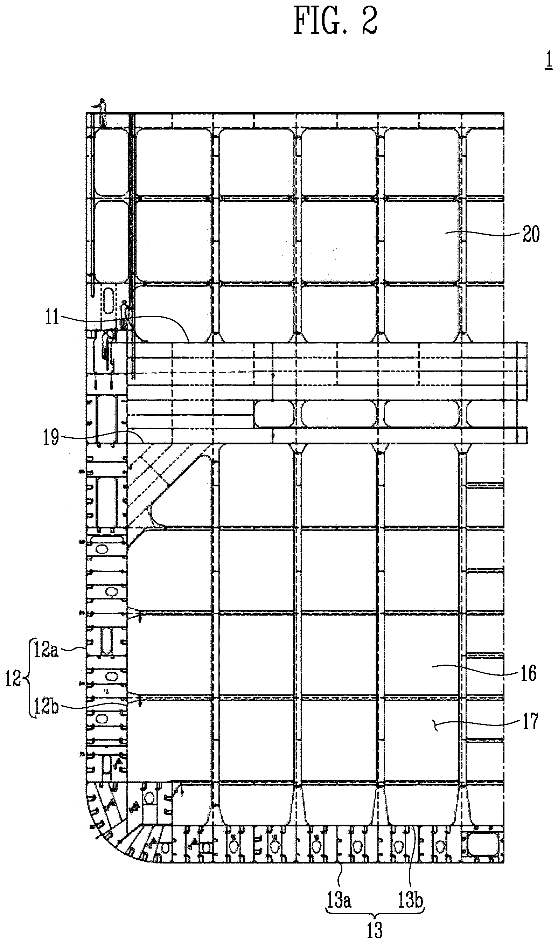

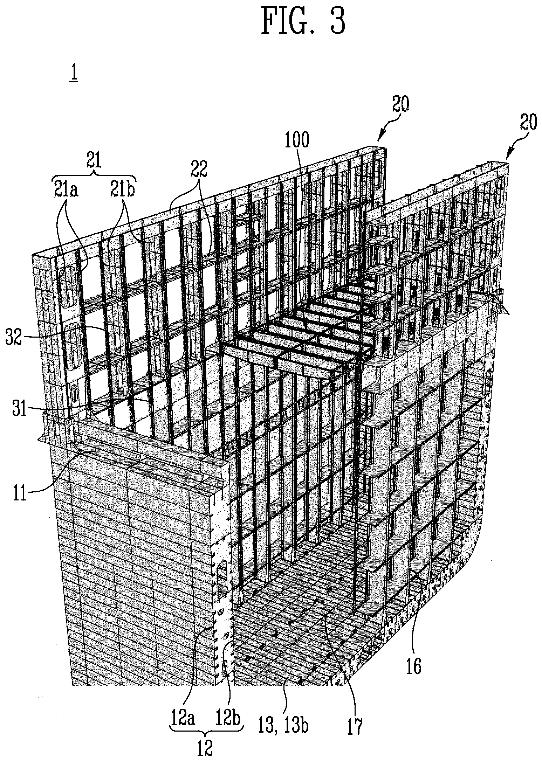

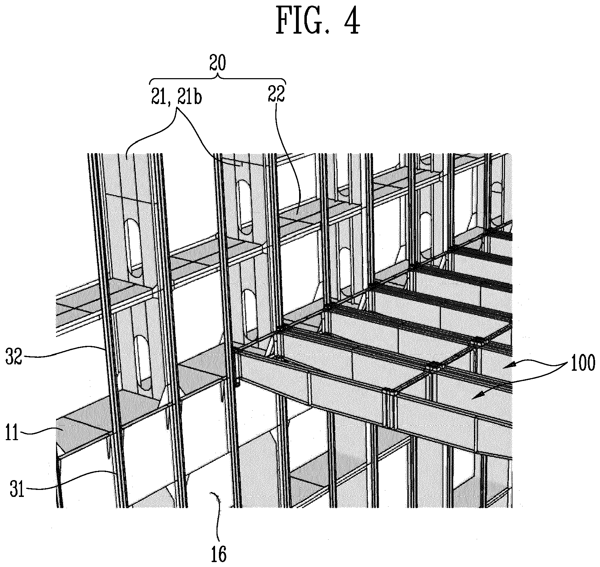

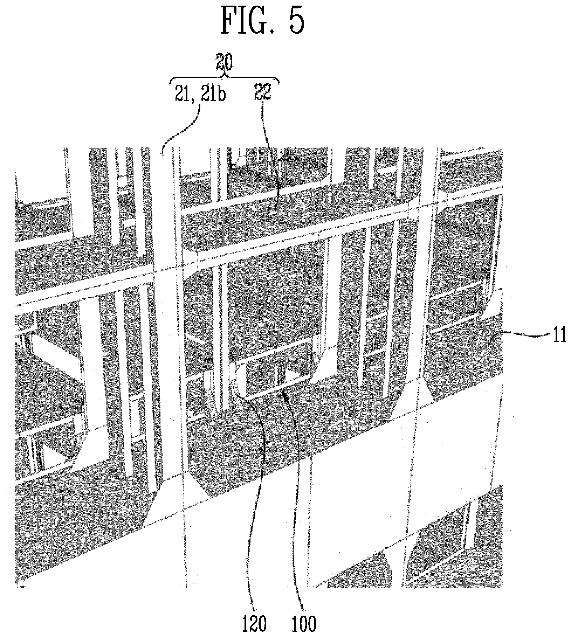

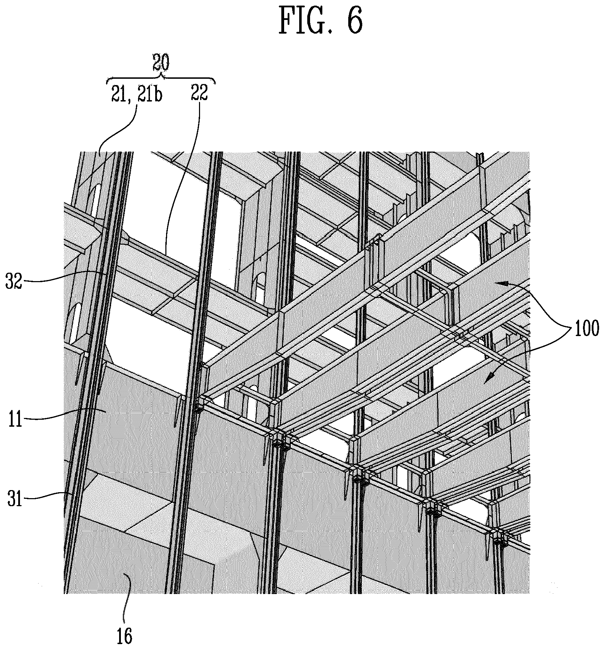

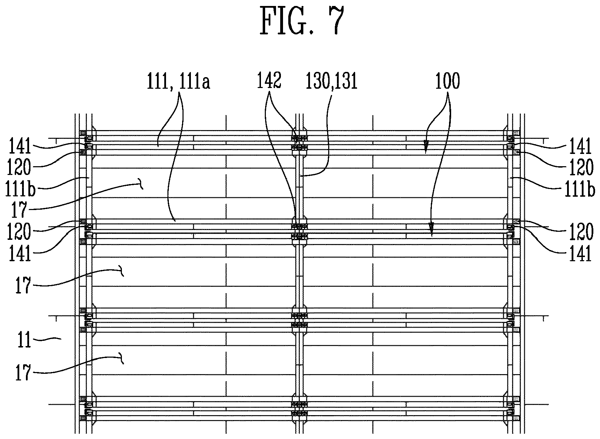

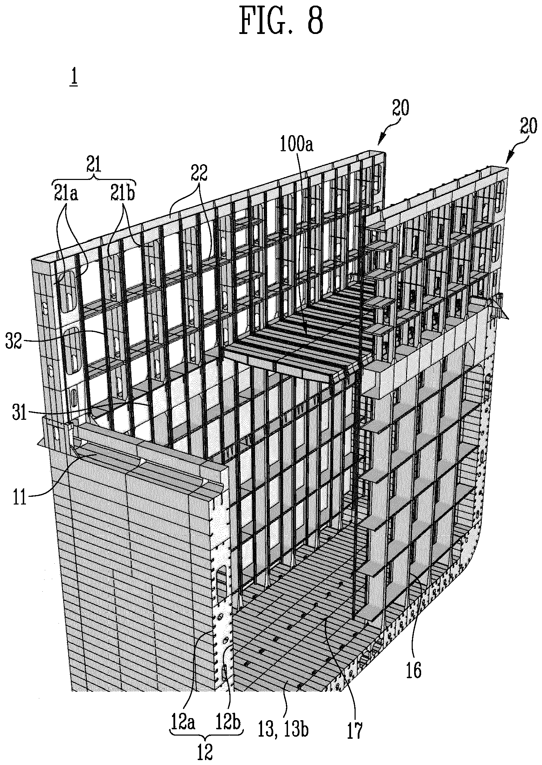

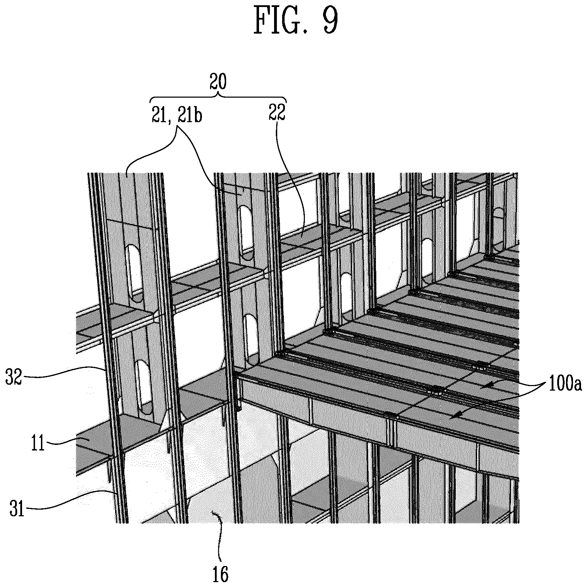

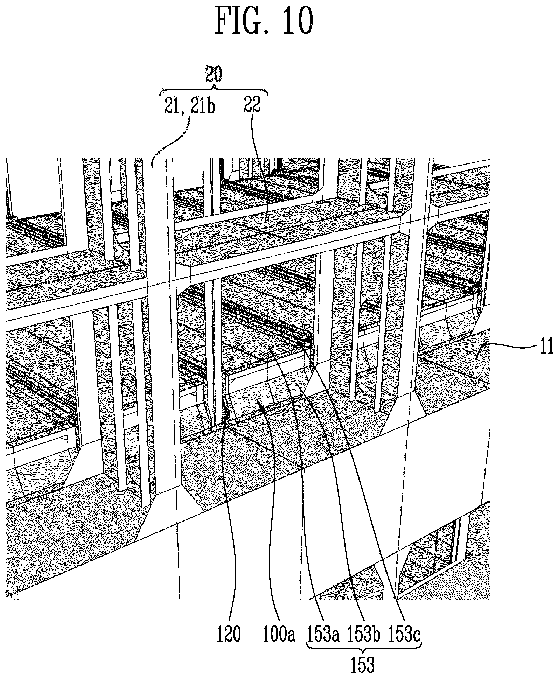

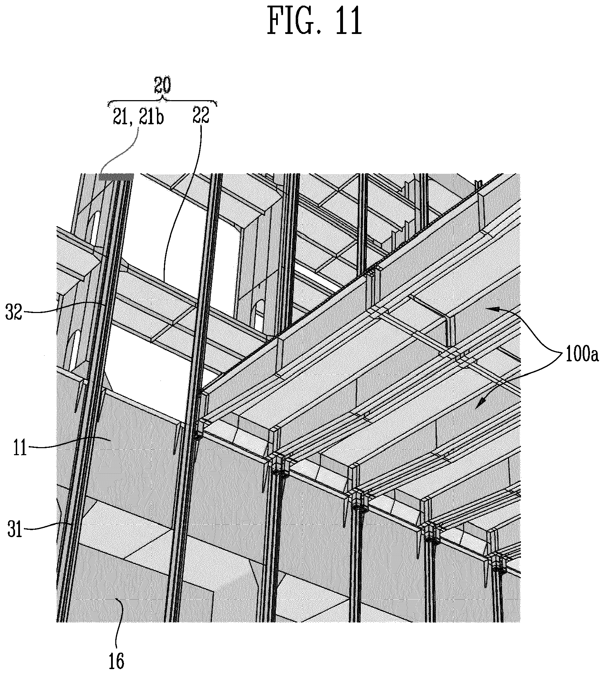

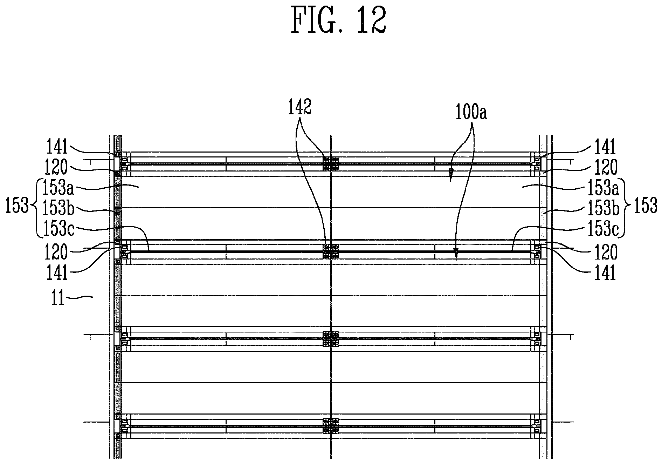

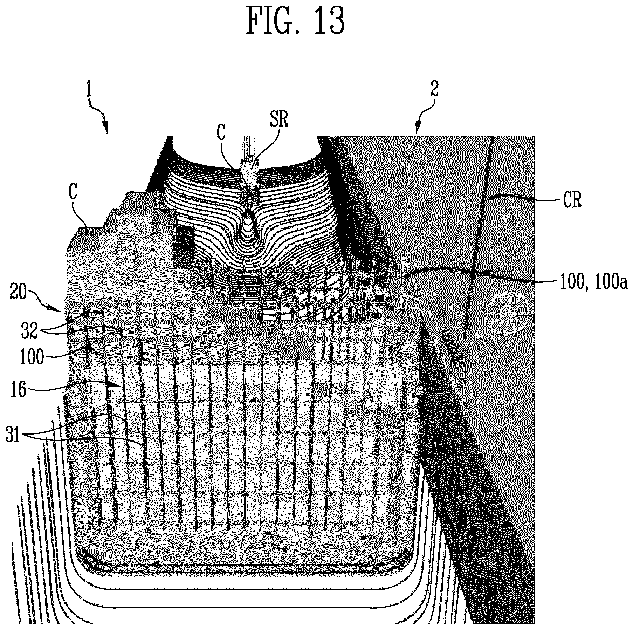

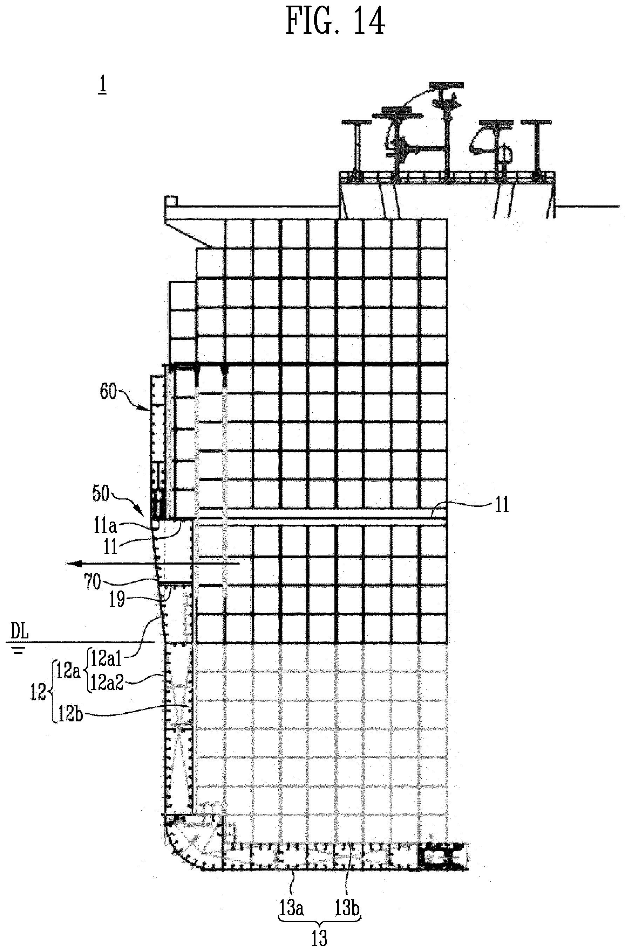

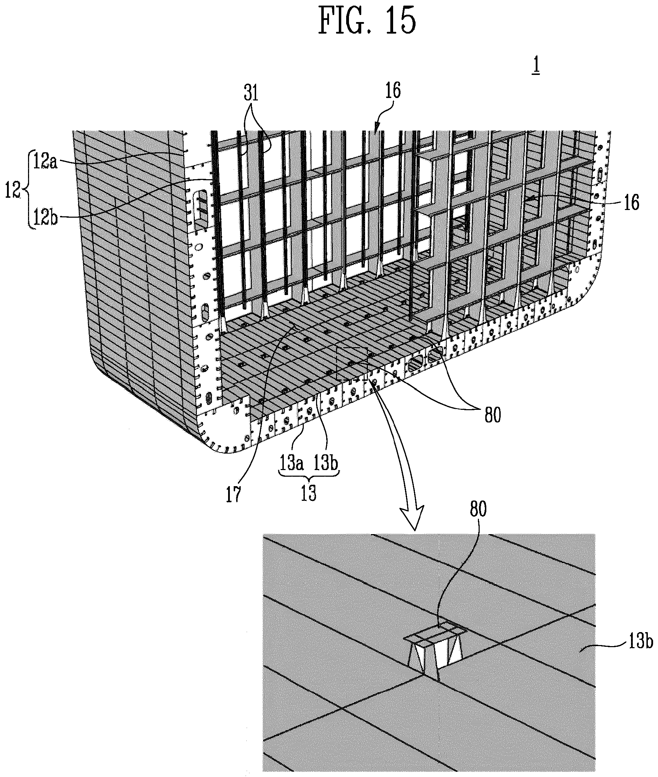

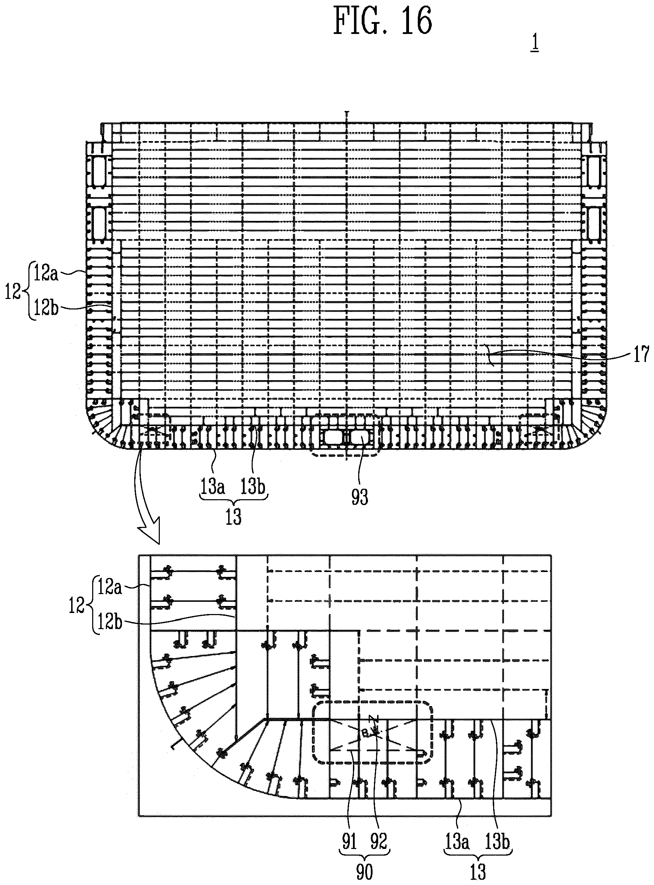

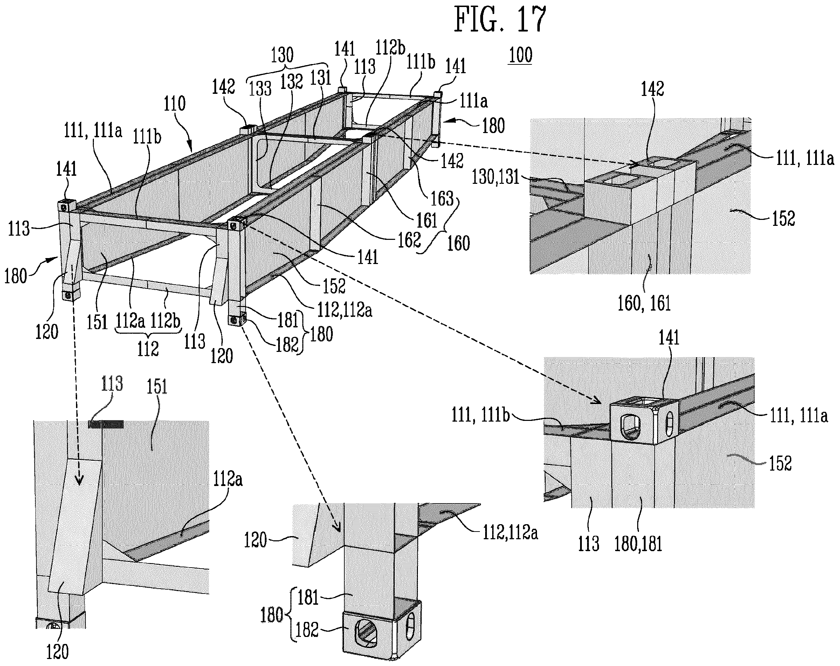

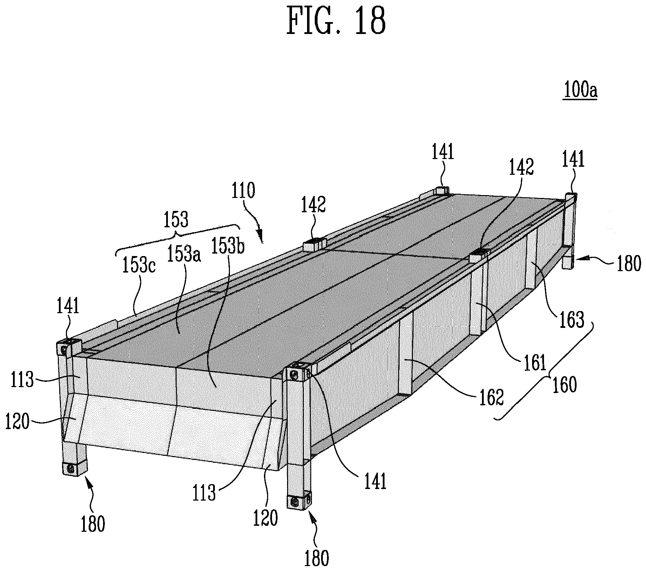

FIG. 1 is a longitudinal section of a container carrier in accordance with an embodiment of the present disclosure, FIG. 2 is a partial cross-sectional view of a container carrier in accordance with an embodiment of the present disclosure, FIGS. 3 to 7 are diagrams for illustrating a container carrier and an open-type container stacking assistance device provided therein in accordance with an embodiment of the present disclosure, FIGS. 8 to 12 are diagrams for illustrating a container carrier and a closed-type container stacking assistance device provided therein in accordance with an embodiment of the present disclosure, FIG. 13 is a three-dimensional frontal perspective view for illustrating a container carrier in accordance with an embodiment of the present disclosure, FIG. 14 is a diagram for illustrating a hull of a container carrier in accordance with an embodiment of the present disclosure, FIG. 15 is a diagram for illustrating a support structure installed at a bottom of a cargo hold to support a container in a container carrier in accordance with an embodiment of the present disclosure, FIG. 16 is a diagram for illustrating a drainage system installed at a bottom of a cargo hold in a container carrier in accordance with an embodiment of the present disclosure, FIG. 17 is a diagram for illustrating an open-type container stacking assistance device of the present disclosure, and FIG. 18 is a diagram for illustrating a closed-type container stacking assistance device of the present disclosure.

As shown in FIGS. 1 to 18, a container carrier 1 according to an embodiment of the present disclosure may transport containers C from a departure point to a destination by loading the containers C in multiple tiers inside and outside the hull 10, and as a container carrier of a new concept without a hatch cover, may be equipped with a container stacking assistance device 100 or 100a for loading and supporting the container C.

In the present embodiment, the container carrier 1 may be a large container ship loading a large container C with 13 or more tiers, including the container C from the bottom of a cargo hold 17 to the amount loaded on the upper part of an upper deck 11, but is not limited thereto. In addition, the container C may include a 20 ft container (hereinafter referred to as a 'small container') or a 40 ft container (hereinafter referred to as a 'large container') mainly loaded on the container carrier 1. However, according to the ISO standard, in addition to the 20 ft or 40 ft mentioned above as a shipping container C, containers of various sizes C are not only used for ships, but also containers C having various specifications, so the small container C or large container C mentioned below is not used in the sense limited to 20 ft or 40 ft.

In the above, the container stacking assistance devices 100 and 100a may be an open-type container stacking assistance device 100 as shown in FIGS. 3 to 7 and 17, and may be a closed-type container stacking assistance device 100a as shown in FIGS. 8 to 12 and 18. Since the open-type container stacking assistance device 100 and the closed-type container stacking assistance device 100a are somewhat similar in configuration and function, hereinafter, the open-type container stacking assistance device 100 will be mainly described, and the different configurations and functions of the closed-type container stacking assistance device 100a will be described with reference to FIGS. 8 to 12 and 18.

A hull 10 forms the exterior of the container carrier 1. The hull 10 is surrounded by the upper deck 11, a side plating 12, and a bottom plating 13.

The hull 10 may be formed of a double-hull structure in which the side plating 12 consists of an outer side plating 12a and an inner side plating 12b, and a double bottom structure in which the bottom plating 13 consists of an outer bottom plating 13a and an inner bottom plating 13b.

Inside the hull 10, the container C may be loaded. To this end, inside the hull 10, a plurality of cargo holds 17 partitioned by a transverse bulkhead 16 in the front-rear direction are provided. In the cargo hold 17, lower cell guides 31 are installed at regular intervals on the side of the transverse bulkhead 16 to guide the loading of the container C inside the cargo hold 17.

In the present embodiment, the cargo hold 17 is a structure in which the entrance is open, and the existing hatch cover is not installed at the entrance, but the container stacking assistance device 100 to be described later may be configured to be mounted at the entrance of the cargo hold 17 or mounted at an arbitrary location inside the cargo hold 17. In other words, the entrance of the cargo hold 17 may be made of a simple structure so that the container stacking assistance device 100 can be mounted. When the container stacking assistance device 100 is mounted inside the cargo hold 17, a groove (not shown) may be formed on the upper deck forming the entrance of the cargo hold 17 so that the container stacking assistance device 100 can pass through the entrance of the cargo hold 17.

In addition, when the container stacking assistance device 100 of the present embodiment is applied to a container carrier 1 having an existing lashing bridge or a container carrier 1 having a hatch coaming at the entrance of the cargo hold 17, it may be mounted on the hatch coaming of the upper part of the upper deck 11 of the cargo hold 17 entrance.

At a location adjacent to the stern 15 in the interior of the hull 10 may be provided an engine room R. A propulsion engine (not shown) is accommodated in the engine room R, and the propulsion engine is mechanically or electrically connected to the propeller to implement the rotation of the propeller by consuming liquefied gas, which is a fuel.

On the upper deck 11 of the hull 10 is provided a cabin A. The cabin A is the living space of the crew and may be divided into several floors in the up and down direction, and a cockpit for controlling navigation may be provided on the uppermost floor.

On the upper deck 11 of the hull 10, an engine casing I is provided at the rear of the cabin A. The engine casing I has a funnel for discharging exhaust generated from the propulsion engine to the outside, and may form a space where an emergency generator or fire extinguishing facility is provided.

In the upper deck 11 of the hull 10, a container C may be loaded on the portion other than the cabin A and the engine casing I. In order to load the container C, top bridges 20 spaced apart from each other by a certain distance in the front-rear direction are provided on the upper deck 11.

The top bridge 20 may be installed extending to the left and right edges of the upper deck 11 between the cargo holds 17, and may be disposed at regular intervals from a bow 14 to a stern 15.

On both sides of the top bridge 20, upper cell guides 32 may be installed at regular intervals. In other words, the top bridge 20 of the present embodiment is not a lashing bridge to which the existing lashing system is applied, but a cell guide system to which the upper cell guide 32 is applied.

Each of the upper cell guides 32 extends from the upper end of the top bridge 20 to the upper deck 11 and may be integrally formed by being connected to each of the lower cell guides 31 installed inside the cargo hold 17.

The upper cell guide 32 guides ascent and descent of the small container C or large container C transported by a crane CR, and the upper cell guide 32 provided on the top bridge 20 and the lower cell guide 31 installed on the transverse bulkhead 16 are connected, respectively, so that when loading and unloading the container C, continuous loading or unloading may be possible without additional work such as hatch cover mounting or lashing work. The upper cell guide 32 may support a transverse load of a small container C or a large container C generated by the motion of the hull 10.

In the top bridge 20 of the present embodiment, by installing the upper cell guides 32 on both sides, the upper cell guides 32 may support and fix the container C, and existing lashing systems (fastening devices such as lashing rods and lashing bars) may be omitted, preventing the container C from falling in front of and behind the container C, which is generally loaded at 1 to 4 tier levels, it may be configured to secure access and work space for maintenance and monitoring of the control unit, etc., provided in the reefer container C, and during operation of the container carrier 1, it is possible to solve the problem that the loaded container C is damaged or lost by directly supporting the container C on the upper deck 11.

In particular, by eliminating imperfect elements of the hatch cover and lashing system, such as the motion of the hatch cover due to the load in case of excessive hull motion due to bad weather during sailing, the damage of the fastening device of the deck or hatch cover, broken fittings of the lashing bridge or relative displacement of the hatch cover and the hull, which is the problem of conventional large container carriers, it is possible to solve the problem that the lashing system continuously collapses and finally the loaded container C is damaged or lost to the sea.

In the case of the existing lashing bridge, since the lashing system is applied, a sufficient width is required according to the operator environment regulations for the lashing operation, while in the top bridge 20 of the present embodiment, by omitting the lashing system and applying the cell guide system, the width may be minimized and the complex structure in which the existing lashing bridge is installed may be formed into a simple structure. As the width of the top bridge 20 may be minimized, the width of the upper deck 11 between the cargo holds 17 may be minimized compared to the existing container carrier with the existing lashing bridge installed, and it is possible to secure design flexibility compared to the same specifications of the container carrier 1 (optimization possible due to the elimination of hull length and other lashing systems) or to increase the shipping capacity of the container C.

The top bridge 20 may be composed of a combination of a plurality of vertical members 21 and a plurality of horizontal members 22.

Among the plurality of vertical members 21, two outer vertical members 21a disposed on the upper deck 11 on each of the left and right sides of the hull 10 may be disposed at an interval corresponding to the width of the small container C or large container C.

Among the plurality of vertical members 21, a plurality of intermediate vertical members 21b disposed between the outer vertical members 21a may be disposed at intervals corresponding to twice the width of the small container C or the large container C.

Here, the upper cell guide 32 may be disposed between the outer vertical members 21a, the plurality of intermediate vertical members 21b, and the plurality of intermediate vertical members 21b, respectively.

Since the top bridge 20 is coupled with the upper cell guide 32 supporting the transverse load of the container C generated by the motion of the hull 10, it is preferable to form it to withstand the transverse load.

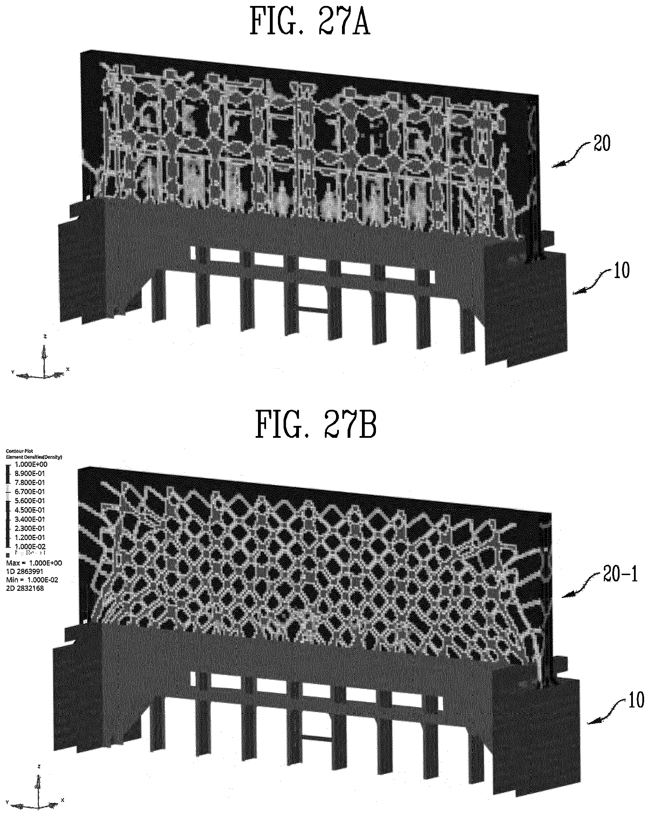

Accordingly, as shown in FIGS. 27 A and 27B, structural analysis was performed on the oblique or vertical and horizontal members constituting the top bridge.

FIG. 27A is a top bridge 20 of the present embodiment composed of a combination of a plurality of vertical members 21 and a plurality of horizontal members 22, and FIG. 27B is a top bridge 20-1 of a comparative embodiment composed of a combination of a plurality of oblique members 23.

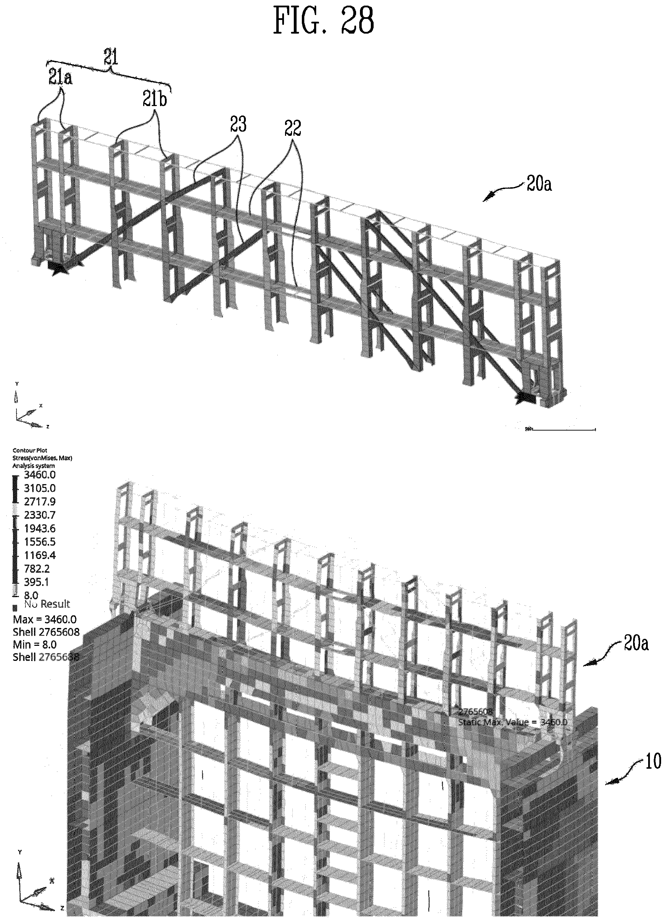

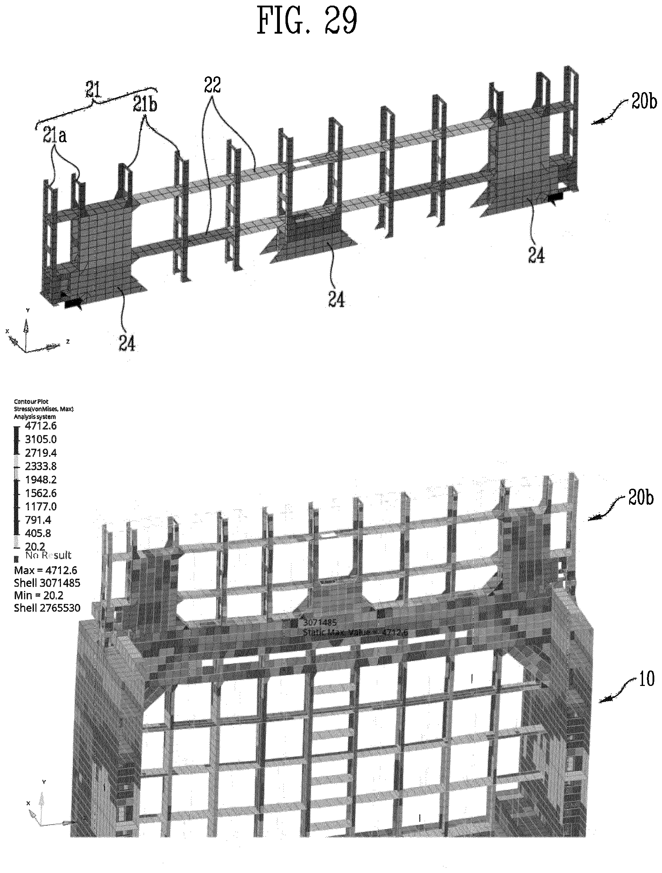

As a result of structural analysis, it was analyzed that the load in the oblique or vertical and horizontal directions was high, and a top bridge 20a of another embodiment of the top bridge 20 as shown in FIG. 28 and a top bridge 20b of another embodiment of the top bridge 20 as shown in FIG. 29 could be obtained.

In the top bridge 20a of another embodiment shown in FIG. 28, a plurality of oblique members 23 are further installed to reduce the load on the plurality of vertical members 21 and the plurality of horizontal members 22 constituting the top bridge 20.

The plurality of oblique members 23 described above may be installed with an upward slope in the center direction of the hull 10 from the lower end of each of the two outer vertical members 21a disposed on the upper deck 11 on each of the left and right sides of the hull 10 and the lower end of at least one intermediate vertical member 21b among the plurality of intermediate vertical members 21b.

In addition, in the top bridge 20b of another embodiment shown in FIG. 29, a plurality of plate members 24 are further installed to reduce the load on the plurality of vertical members 21 and the plurality of horizontal members 22 constituting the top bridge 20.

The plurality of plate members 24 described above may be installed, among the plurality of intermediate vertical members 21b, between one intermediate vertical member 21b adjacent to each outer vertical member 21a and among the plurality of intermediate vertical members 21b, between two intermediate vertical members 21b disposed in the center part of the hull 10, respectively.

As the upper cell guide 32 is installed up to the uppermost part, or lower or higher than the uppermost part customized according to the needs of the ship owner, the top bridges 20, 20a, and 20b of the present disclosure may fundamentally block loss of the container C due to overturning, according to the needs of the ship owner, the number of tiers on the upper part of the upper deck 11 can be customized, and it may be manufactured as a unit block that integrates the upper and lower structures of the hull, so that light weight and productivity can be maximized.

Further, in the top bridges 20, 20a, and 20b, to additionally apply the existing lashing system at the uppermost end in addition to the cell guide system described above, at least one of a lashing eye, a lashing ring, a lashing plate, a plug, and a cone, which are fixing devices of the lashing system, is additionally disposed to further improve safety of the loading container C.

The container carrier 1 according to an embodiment of the present disclosure may further include a hull extension part 50 protruding left and right sides of the hull 10, as shown in FIG. 14. The hull extension part 50 may consist of an extension deck 11a and an overhang outer plating 12a1.

The extension deck 11a may extend outward from the left and right edges of the upper deck 11 longer than a length corresponding to the width of the container C.

The overhang outer plating 12a1 may extend with a slope of a certain angle from the draft line DL to the edge of the extension deck 11a. The overhang outer plating 12a1 may reduce the possibility of intrusion of green water by making the outer side plating 12a have a certain slope outward. In the case of a container carrier 1 with a capacity of 6,500 TEU or more that loads containers C in 8 tiers (sometimes 9 tiers) inside the cargo hold 17, although the actual possibility of invasion of green water is low, even considering this point, if the overhang outer plating 12a1 is applied, the green water risk can be reliably controlled.

The surrounding configuration that varies by further including the hull extension part 50 in the container carrier 1 is described as follows.

First, in the side plating 12 which consists of an inner side plating 12b and an outer side plating 12a, the inner side plating 12a may consist of a vertical outer plating 12a2 extending from the draft line DL to the bottom plating 13, and an overhang outer plating 12a1 extending from the draft line DL to the edge of the extension deck 11a.

The top bridge 20 may be installed extending from the left and right edges of the upper deck 11 to the left and right edges of the extension deck 11a. Here, on the extension deck 11a between the top bridges 20 facing each other in the front-rear direction, a small container C or a large container C may be additionally loaded, and on the extension decks 11a on the left and right sides of the hull 10 between the top bridges 20 facing each other in the front-rear direction, reinforcing bulkheads 60 to be described later may be discontinuously installed along the left and right edges of the hull 10.

In addition, the top bridge 20 extends from the left and right edges of the upper deck 11 to the left and right edges of the extension deck 11a, and may be extended and installed so as to secure a space in which a reinforcing bulkhead 60 to be described later is installed. Here, the reinforcing bulkhead 60 to be described later may be continuously installed along the edge of the extension deck 11a on the left and right sides of the hull 10.

Although the container carrier 1 according to an embodiment of the present disclosure described above has been described as having the top bridge 20 to which the cell guide system is applied, but is not limited thereto, and a lashing bridge to which a lashing system is applied similarly or identically to the existing one may be installed in some rows or in some sections on the left and right sides of one row. In other words, the container carrier 1 according to an embodiment of the present disclosure may have a hybrid type bridge in which the top bridge 20 to which the cell guide system of the present disclosure is applied and the lashing bridge to which the existing lashing system is applied are mixed.

The container carrier 1 according to an embodiment of the present disclosure may further include the reinforcing bulkheads 60 installed on the left and right sides of the hull 10 to improve the bending moment by hogging or sagging of the hull 10.

The reinforcing bulkhead 60 may be formed in a double-hull structure similar to the side plating 12 and may be installed at the edge of the upper deck 11 on the left and right sides of the hull 10.

The reinforcing bulkhead 60 is smaller in width than the width of the side plating 12 forming a double-hull structure, and the height may be formed equal to or lower than the height of the top bridge 20.

The reinforcing bulkhead 60 may be formed of various double-hull structures such as partially open or enclosed type.

In the reinforcing bulkhead 60, based on the formula for obtaining the moment of inertia, I = Bh3/12 (where 'I' is the moment of inertia, 'B' is the width, and 'h' is the height), as 'h' increases, the moment of inertia increases, and being formed to be connected to the side plating 12 eventually leads to an increase in the height of the side plating 12, and it is possible to improve the bending moment due to hogging or sagging.

When the top bridge 20 is installed to extend to the left and right edges of the upper deck 11, or when the extension deck 11a is further provided and the top bridge 20 is installed extending from the left and right edges of the upper deck 11 to the left and right edges of the extension deck 11a, the reinforcing bulkhead 60 may be installed on the upper deck 11 on the left and right sides of the hull 10 between the top bridges 20 facing each other in the front-rear direction, and disposed discontinuously along the edges of the left and right sides of the hull 10. The reinforcing bulkhead 60 may be connected to the top bridge 20.

The reinforcing bulkhead 60, when the extension deck 11a is further provided and the top bridge 20 extends from the left and right edges of the upper deck 11 to the left and right edges of the extension deck 11a but is extended to secure space for the reinforcing bulkhead 60 to be installed, may be continuously installed along the edge of the left and right sides extension decks 11a of the hull 10. The reinforcing bulkhead 60 may be connected to the top bridge 20.

The container carrier 1 according to an embodiment of the present disclosure may further include a water discharge port 70, as shown in FIG. 14. When the side plating 12 has a double hull structure consisting of an inner side plating 12b and the outer side plating 12a, the water discharge port 70 may be installed through the side plating 12 of the double hull structure in the freeboard deck 19 to the outside so that water is drained from the dock to the outside.

The container carrier 1 according to an embodiment of the present disclosure may further include support structures 80 as shown in FIG. 15.

The support structures 80 are disposed on the bottom surface of the cargo hold 17 to support the container C upwardly and spaced apart, and between the bottom surface of the cargo hold 17 and the container C of the lowermost layer, a flow path may be formed for the flow of foreign substances (e.g., seawater, rainfall, etc.) flowing into the cargo hold 17.

When the bottom plating 13 has a double bottom structure consisting of an inner bottom plating 13b and an outer bottom plating 13a, to support the container C without the container C being submerged due to foreign substances, e.g., seawater or rainfall penetrating into the entrance of the cargo hold 17, the support structure 80 may be installed at regular intervals on the bottom surface of the inner bottom plating 13b.

The support structure 80 may be installed on the bottom of the inner bottom plating 13b at a location corresponding to the corner casting (not shown) of the container C, or may be installed on the bottom of the inner bottom plating 13b at a location corresponding to the intermediate portion between the corner castings of containers C loaded adjacently.

The support structure 80 may have a height of 250 mm to 350 mm from the bottom of the inner bottom plating 13b.

In the container carrier 1, as shown in FIG. 16, a drainage system 90 may be installed on the bottom plating 13 to drain water penetrating through the entrance of the cargo hold 17 to the outside.

When the bottom plating 13 has a double bottom structure consisting of an inner bottom plating 13b and an outer bottom plating 13a, the drainage system 90 may be configured so that in a bilge well 91 formed in a box shape under the inner bottom plating 13b at the lower left and right sides of the transverse bulkhead 16, the water entering through a drainage hole 92 formed in the inner bottom plating 13b is collected, and the water collected in the bilge well 91 is drained by a bilge pump (not shown) in the engine room R through a drainage pipe (not shown) of a pipe duct 93.

The container carrier 1 according to an embodiment of the present disclosure may be equipped with the container stacking assistance device 100.

The container stacking assistance device 100 is provided in the container carrier 1 without a hatch cover, applied to at least one cargo hold 17, and may be configured to load and support a small container C or a large container C on its upper side, and may include an upper frame 111, a lower frame 112, a support 113, a protruding member 120, a reinforcing frame 130, a first fitting member 141, and a second fitting member 142. In the container stacking assistance device 100, the upper frame 111, the lower frame 112, and the support 113 may be intercoupled to form a main body 110 in which the overall shape is in the form of a rectangular box.

The upper frame 111 may be configured in a rectangular shape having a width corresponding to the width of the small container C or the large container C, and having a length corresponding to the length of the large container C.

The upper frame 111 may consist of a pair of first major axis frames 111a disposed with a width corresponding to the width of the small container C or the large container C and having a length corresponding to the length of the large container C, and a pair of first minor axis frames 111b connecting ends of each of the pair of first major axis frames 111a and having a width corresponding to the width of the small container C or large container C.

The lower frame 112 may be configured in a rectangular shape having a width corresponding to the width of the small container C or the large container C, and having a length corresponding to the length of the large container C.

The lower frame 112 may consist of a pair of second major axis frames 112a disposed with a width corresponding to the width of the small container C or large container C and having a length corresponding to the length of the large container C, and a pair of second minor axis frames 112b connecting each end of the pair of second major axis frames 112a and having a width corresponding to the width of the small container C or large container C.

In the above, each of the pair of second major axis frames 112a may be configured to have both ends connected to the lower end of the support 113 to be described later, has a downward slope as it goes inward and is bent be horizontal with each of the pair of first major axis frames 111a in the intermediate portion.

The support 113 may be provided in the height direction to the upper frame 111 and the lower frame 112, and may be configured to connect each of the square corners of the upper frame 111 and each of the square corners of the lower frame 112.

The protruding member 120 may be configured to protrude to the outward direction from the upper and lower frames 111 and 112 or the support 113 so that it can be mounted at an arbitrary location of the cargo hold 17. The protruding member 120 may be configured to protrude longitudinally outward from the lower end of each support 113, to be mounted at the cargo hold 17 entrance or at an arbitrary location inside the cargo hold 17.

When the protruding member 120 is mounted on the upper deck 11 of the cargo hold 17 entrance, the load of the small container C or the large container C transmitted through the support 113 may be transmitted to the upper deck 11.

When the protruding member 120 is mounted at an arbitrary location inside the cargo hold 17 using the location adjusting member 40 to be described later, the upper deck 11 of the cargo hold 17 entrance may form a groove through which the protruding member 120 passes in the portion where the protruding member 120 is mounted. Accordingly, the protruding member 120 passes through the groove formed in the upper deck 11, and then is mounted on a location adjusting member 40 to be described later installed at an arbitrary location of the transverse bulkhead 16 inside the cargo hold 17, and may transmit the load of the small container C or the large container C through the support 113 to the transverse bulkhead 16.

When the container stacking assistance device 100 of the present disclosure is applied to an existing container carrier in which a lashing bridge is installed or an existing container carrier having hatching at the cargo hold 17 entrance, the protruding member 120 may be mounted on the upper hatch coaming of the upper deck 11 at the cargo hold 17 entrance.

The reinforcing frame 130 connects the intermediate portion with respect to the longitudinal direction of the upper frame 111 and the intermediate portion with respect to the longitudinal direction of the lower frame 112, and may support a load of a small container C or a large container C loaded on the upper surface of the container stacking assistance device 100.

The reinforcing frame 130 may consist of a first horizontal stiffener 131 connecting the intermediate portions of each of the pair of first major axis frames 111a, a second horizontal stiffener 132 connecting the intermediate portions of each of the pair of second major axis frames 112a, a first vertical stiffener 133 connecting one end of the first horizontal stiffener 131 and one end of the second horizontal stiffener 132, and a second vertical stiffener (reference numeral not shown) connecting the other end of the first horizontal stiffener 131 and the other end of the second horizontal stiffener 132.

The container stacking assistance device 100 may further include a first plate 151, a second plate 152, and a reinforcing member 160.

The first plate 151 may be installed in one side frame formed by any one of the pair of first major axis frames 111a, any one of the pair of second major axis frames 112a, and the support 113 connecting both ends thereof.

The second plate 152 may be installed in the other side frame formed by the other one of the pair of first major axis frames 111a, the other one of the pair of second major axis frames 112a, and the support 113 connecting both ends thereof.

The reinforcing member 160 may be installed on at least one of the outer and inner side surfaces of the first plate 151 and the second plate 152, respectively.

When installed on the outer side surface of each of the first plate 151 and the second plate 152, the reinforcing member 160 may, to face each of the first vertical stiffener 133 and the second vertical stiffener with each of the first plate 151 and the second plate 152 interposed therebetween, consist of an intermediate reinforcing member 161 connected to each of the pair of first major axis frames 111a and each of the second major axis frames 112a, and first and second reinforcing members 162 and 163 connected to each of the pair of first major axis frames 111a at a bent portion of each of the pair of second major axis frames 112a while being disposed between the supports 113 on both sides based on the intermediate reinforcing member 161.

In the present embodiment, a pair of second major axis frames 112a has been described as having a bending form, but it may be formed in a flat form. In other words, the container stacking assistance device 100 of the present embodiment may be made in the form of a cuboid box of the entire shape.

The container stacking assistance device 100 of the present disclosure may, by including a reinforcing frame 130, a first plate 151 and a second plate 152, and all or part of the reinforcing member 160, secure rigidity capable of supporting the load of the container C loaded on the upper part by itself, unlike conventional similar technologies.

The first fitting member 141 is provided at the upper part of each of the square corners of the upper frame 111, and may be used for fixing when loading a large container C or small container C, or for hoisting when transporting by a crane CR.

A pair of the second fitting members 142 are provided at the upper part of the intermediate portion of the upper frame 111 and may be used for fixing when loading the small container C or used for hoisting together with the first fitting member 141 when transporting to the crane CR.

In the above, the first fitting members 141 may be formed at the same height at each of the square corners of the upper frame 111, and the second fitting members 142 may be provided at the upper end of the intermediate portion of each of the pair of first major axis frames 111a, and may be formed 5 mm to 15 mm higher than the height of the first fitting member 141 so that when loading two small containers C disposed in the longitudinal direction, the two small containers C facing each other do not come into contact with each other even when tilted inward due to a buckling phenomenon caused by the load.

The container stacking assistance device 100 of the present disclosure includes a first fitting member 141 and a second fitting member 142, so that a small container C and a large container C may be mixed and securely fixed on the upper surface, unlike conventional similar techniques.

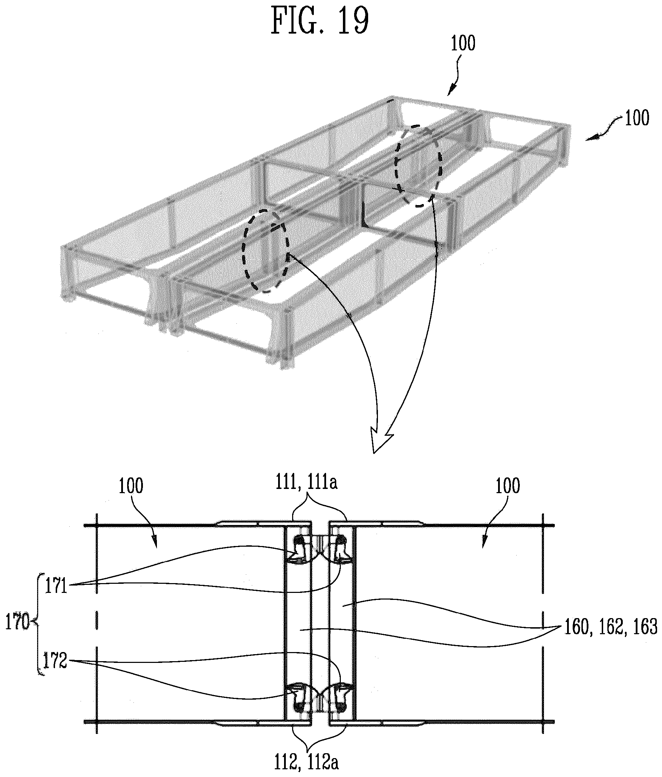

The container stacking assistance device 100 may further include a coupling member 170 connecting the main body 110 in parallel, as shown in FIG. 19.

The coupling member 170 may connect two or more upper and lower frames 111 and 112 disposed adjacent to each other. The coupling member 170 may consist of a first coupling member 171 installed at least two on each side of the upper frame 111, and a second coupling member 172 installed at least two on each side of the lower frame. The first and second coupling members 171 and 172 may be hinged spacers.

The first coupling member 171 may be fixed to each of the pair of first major axis frames 111a and may be rotatably connected to the upper part of each of the first and second reinforcing members 162 and 163.

The second coupling member 172 may be fixed to each of the pair of second major axis frames 112a and may be rotatably connected to the lower part of each of the first and second reinforcing members 162 and 163.

In the above, the first coupling member 171 may connect the upper part of the neighboring main body 110 when connecting the main body 110 in parallel, and the second coupling member 172 may connect the lower part of the neighboring main body 110 when connecting the main body 110 in parallel.

The first and second coupling members 171 and 172 may maintain a constant interval between the main bodies 110 connected in parallel. In other words, when the container stacking assistance device 100 of the present embodiment is connected in parallel by the first and second coupling members 171 and 172, a gap of a certain interval is formed between the neighboring container stacking assistance devices 100, and such a gap may have an interval in which the upper cell guide 32 can be inserted.

When the container stacking assistance device 100 of the present embodiment is connected in parallel using the first and second coupling members 171 and 172, it becomes a closed structure by the first and second plates 151 and 152 of each of the neighboring container stacking assistance devices 100, and although it may be difficult to fasten the first and second coupling members 171 and 172 through a gap of a certain interval, it may be possible to form holes (not shown) in the first and second plates 151 and 152 at locations corresponding to the first and second coupling members 171 and 172, provide a separate operating space in the upper and lower frames 111 and 112, or fastened by a method such as using a separate tool.

When transported by crane, the container stacking assistance device 100 may be transported alone without the main body 110 connected in parallel, or may be transported in a state in which at least two main bodies 110 are connected in parallel by first and second coupling members 170.

In the present embodiment, although it has been described that at least two or more container stacking assistance devices 100 are connected in parallel using first and second coupling members 170, but are not limited thereto, and the container stacking assistance device 100 may be manufactured in a form in which two or more are connected in a plurality in the transverse direction, and at this time, a gap of a certain interval is formed between the connected container stacking assistance devices 100, and this gap may have an interval into which the upper cell guide 32 can be inserted. In other words, the container stacking assistance device 100 of the present disclosure may cover a single type and a multi-type.

In the present embodiment, when the container stacking assistance device 100 is a single type, although the sizes (width and length) of the upper frame 111 and the lower frame 112 have been described based on the small container C or large container C, when the container stacking assistance device 100 is multi-type, the upper frame 111 and the lower frame 112 have a width and length of 1 to n times (n is a natural number) the width and length of the small container C or large container C while having a flat cross section smaller than the cargo hold 17 entrance.

In the above, it is preferable to connect an odd number of container stacking assistance devices 100 connected in parallel to align the center of gravity when transporting them to the crane CR. In other words, when transporting the container stacking assistance device 100 using the spreader SR attached to the crane CR, since the spreader SR is connected to the container stacking assistance device 100 located in the center of the container stacking assistance devices 100 connected in parallel, it is necessary to connect an odd number of them so that the center of gravity can be easily aligned during transport. The number of container stacking assistance devices 100 connected in parallel may vary depending on the operation load of the crane CR.

The container stacking assistance device 100 may further include a stowage member 180 vertically connecting and/or supporting the main body 110.

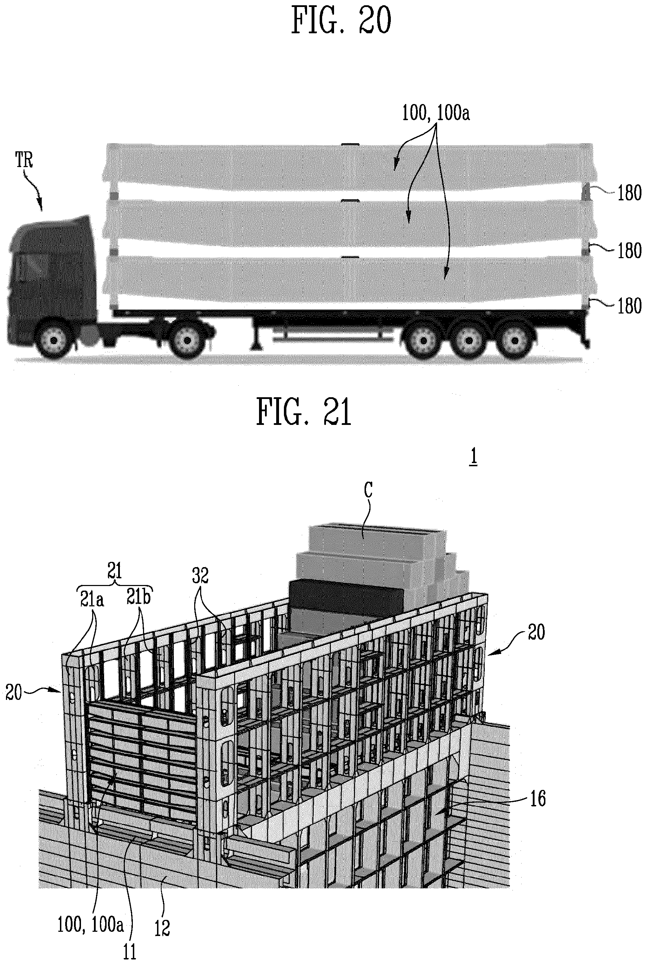

As shown in FIGS. 20 and 21, the stowage member 180 may have a structure capable of switching from a first state of being stowed on the transport vehicle TR or the land 2 to a second state of being stowed on the container carrier 1.

The stowage member 180 may consist of a stowage leg 181 installed on the outer side in the width direction on each side of the support 113, and a third fitting member 182 provided at the lower end of each of the stowage legs 181 and fastened with the first fitting member 141 provided in the main body 110 to be stowed on the upper part when the main body 110 is stacked in multiple tiers.

When the main body 110 is stowed in multiple tiers using the first fitting member 141 and the third fitting member 182, the stowage leg 181 may be configured so that the pair of second fitting members 142 provided on the main body 110 stacked on the lower part do not come into contact with the lower frame 112 of the main body 110 stacked on the upper part.

In other words, when the container stacking assistance device 100 is stowed vertically, the stowage leg 181 may be formed with a length such that the lower portion of the container stacking assistance device 100 stowed on the upper part and the upper portion of the container stacking assistance device 100 stowed on the lower part do not come into contact, which is because there is a possibility of damage due to contact friction when shaking occurs due to external environmental factors in a state in which the upper and lower container stacking assistance devices 100 are in contact.

The stowage member 180 configured as above may have, as a function capable of connecting and/or supporting the container stacking assistance device 100, a function to safely store the container stacking assistance device 100 when manufactured or stowed on land 2, a function of supporting and connecting each of the container stacking assistance devices 100 stowed vertically when a plurality of container stacking assistance devices are transported from the land 2 to the transport vehicle TR, and a function of supporting and connecting each container stacking assistance device even when a plurality of container stacking assistance devices 100 are stowed and stored in some cells 18 of the container carrier 1.

The container stacking assistance device 100 configured as described above may be guided by the upper cell guide 32 when ascending and descending between the neighboring top bridges 20 by the crane CR.

In addition, during container unloading operation or prior to container loading operation, as shown in FIG 21, the container stacking assistance device 100 may be stowed and stored between the outer vertical members 21a facing in the front-rear direction on the upper deck 11 on the left or right side of the hull 10, and although not shown, it may be stowed and stored between the intermediate vertical members 21b facing in the front-rear direction, and even in a state in which two or more container stacking assistance devices 100 are connected in parallel, it may be stowed and stored between two or more vertical members 21. As such, by stowing and storing the container stacking assistance device 100 in the container carrier 1, there is no need for a separate stowage location on land, and the loading and unloading efficiency of the container C can be improved.

In addition, when the container stacking assistance devices 100 are connected in parallel by the first and second coupling members 171 and 172, a gap is formed between the neighboring container stacking assistance devices 100, and when ascending and descending between neighboring top bridges 20 by the crane CR, the upper cell guide 32 can be inserted into the gap and guided.

In the above, the open-type container stacking assistance device 100 in which the left and right of the main body 110 are sealed with the first and second plates 151 and 152, and the top, bottom, front and rear of the main body 110 are opened has been described, and hereinafter, a closed-type container stacking assistance device 100a will be described.

As shown in FIGS. 8 to 12 and 18, compared to the open-type container stacking assistance device 100, the closed-type container stacking assistance device 100a may be similar to the open-type container stacking assistance device 100 in overall shape, function, and configuration, but may differ in that a watertight member 153 is further configured.

Hereinafter, the closed-type container stacking assistance device 100a will be described, and since other configurations except for the watertight member 153 are the same as or similar to the open-type container stacking assistance device 100, the same reference numerals are used (parts not shown in FIGS. 8 to 12 and 18 refer to those shown in FIGS. 3 to 7 and 17), and accordingly, a detailed description of each of the same components will be omitted here in order to avoid duplication of description, and only the watertight member 153, which is a component different from the open-type container stacking assistance device 100, and the parts that are changed due to thereof will be described.

The watertight member 153 mounts the closed-type container stacking assistance device 100a on the upper deck 11 at the cargo hold 17 entrance, and when the container C is loaded at the upper part thereon, it may be configured to block water (seawater or rainfall) from entering the cargo hold 17, and may include a first watertight plate 153a, a second watertight plate 153b, and a third watertight plate 153c.

The first watertight plate 153a may be installed on an upper side frame formed by a pair of first major axis frames 111a and a pair of first minor axis frames 111b constituting the upper frame 111, and may block water from entering the cargo hold 17 through the upper part of the closed-type container stacking assistance device 100a.

The second watertight plate 153b may be installed on the front and rear side frames formed by the first minor axis frame 111b of the upper frame 111, the support 113, and the protruding member 120, and may block water from entering the cargo hold 17 through the front and rear portions of the closed-type container aid 100a. The lower end part of the second watertight plate 153b protrudes outward in correspondence to the shape of the protruding member 120, thereby being located on the upper deck 11 of the cargo hold 17 entrance.

The third watertight plate 153c may be installed at a certain height along the edge of each of the pair of first major axis frames 111a constituting the upper frame 111, and guide the water accumulated on the first watertight plate 153a to the second watertight plate 153b forming the side surface of the closed-type container stacking assistance device 100a to block the inflow of water into the cargo hold 17.

The third watertight plate 153c installed along the edge of each of the pair of first major axis frames 111a may, to prevent damage when the small container C or large container C is fixed to the first and second fitting members 141 and 142, have a gap larger than the width of the small container C or large container C, or form the height of the third watertight plate 153c to be lower than that of the first fitting member 141 and the second fitting member 142.

In other words, unlike the open-type container stacking assistance device 100, the closed-type container stacking assistance device 100a may have an upper width larger than that of the small container C or the large container C.

As described above, when the closed-type container stacking assistance device 100a provided with the watertight member 153 is mounted on the upper deck 11 at cargo hold 17 entrance, and in a state in which the container C is loaded at the upper part thereon, the water flows down the side wall of the container C, the water accumulates on the first watertight plate 153a, the stagnant water does not flow into the cargo hold 17 by overflowing the side of the closed-type container stacking assistance device 100a by the third watertight plate 153c, and the water may be drained to the upper deck 11 through the second watertight plate 153b.

As described above, the container stacking assistance devices 100 and 100a of the present disclosure may be formed in a simple open-type and an open-type parallel connection type by the coupling member 170, a simple closed-type and a closed-type parallel connection type by the coupling member 170. Here, the open-type may be a non-watertight type, and the closed-type may be a watertight type or a sealed type.

The container stacking assistance devices 100 and 100a of the present disclosure may be operated in the same operation method as the ISO container C, may be operated with a crane CR to maximize loading convenience, may be loaded and transported from land to a transport vehicle TR to promote production and logistics convenience, and may reduce the weight of the existing 6 row hatch cover by 25% (for example, about 600 tons based on 15K).

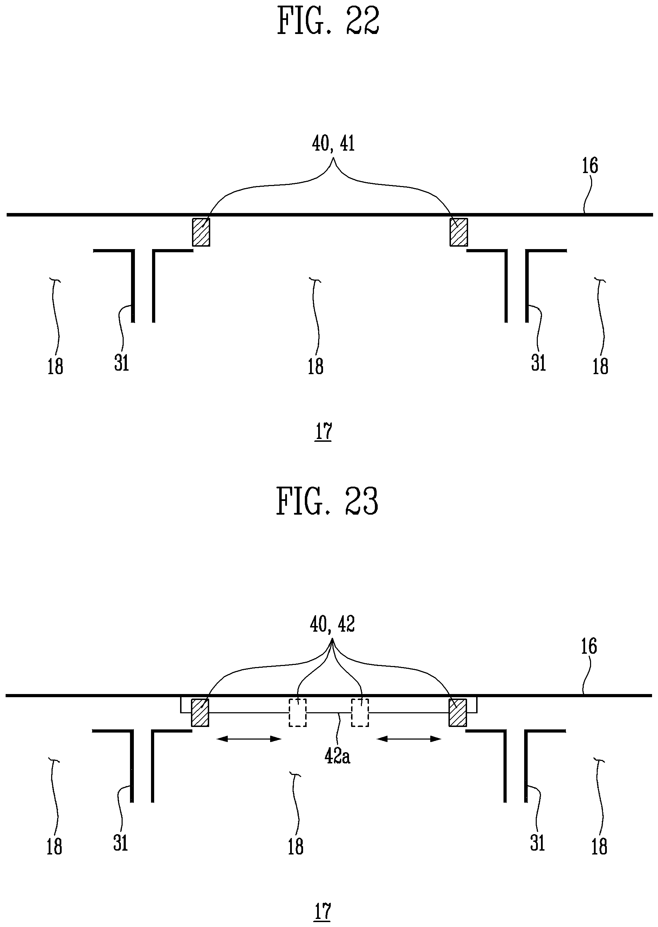

The container carrier 1 according to an embodiment of the present disclosure may, as shown in FIGS. 22 to 26, include a location adjusting member 40 for adjusting the location of the container stacking assistance device 100 and adjusting the number of loading tiers of the container stacking assistance device 100.

The location adjusting member 40 is disposed in the horizontal direction between the lower cell guides 31 adjacent to each of the plurality of cells 18 inside the cargo hold 17, and may be installed in at least one or more placed at an arbitrary location in the vertical direction of the transverse bulkhead 16 that partitions the cargo hold.

The location adjusting member 40 may be configured to mount the container stacking assistance device 100 lowered into the cargo hold 17 through a groove formed on the upper deck 11.

The location adjusting member 40 may be at least one of a fixed stopper 41, a sliding stopper 42, and a hinged stopper 43a, 43b, 43c.

The location adjusting member 40 may be a fixed stopper 41 as shown in FIG. 22.

A pair of fixed stoppers 41 are disposed in the horizontal direction between the lower cell guides 31 adjacent to each other in each of the plurality of cells 18, and may be installed at an arbitrary location in the vertical direction of the transverse bulkhead 16 so as to correspond to the protruding member 120 of the container stacking assistance device 100 so that the protruding member 120 is mounted.

In addition, the location adjusting member 40 may be a sliding stopper 42, as shown in FIG. 23.

A pair of sliding stoppers 42 may be installed to be movable along rails 42a installed in the horizontal direction on the transverse bulkhead 16 between the lower cell guides 31 adjacent to each of the plurality of cells 18.

The sliding stopper 42 may be moved left and right when the container stacking assistance device 100 ascends and descends so that the protruding member 120 is mounted (shown as a solid line in the drawing), and may be moved to the middle so that the protruding member 120 does not interfere (shown as a dotted line in the drawing).

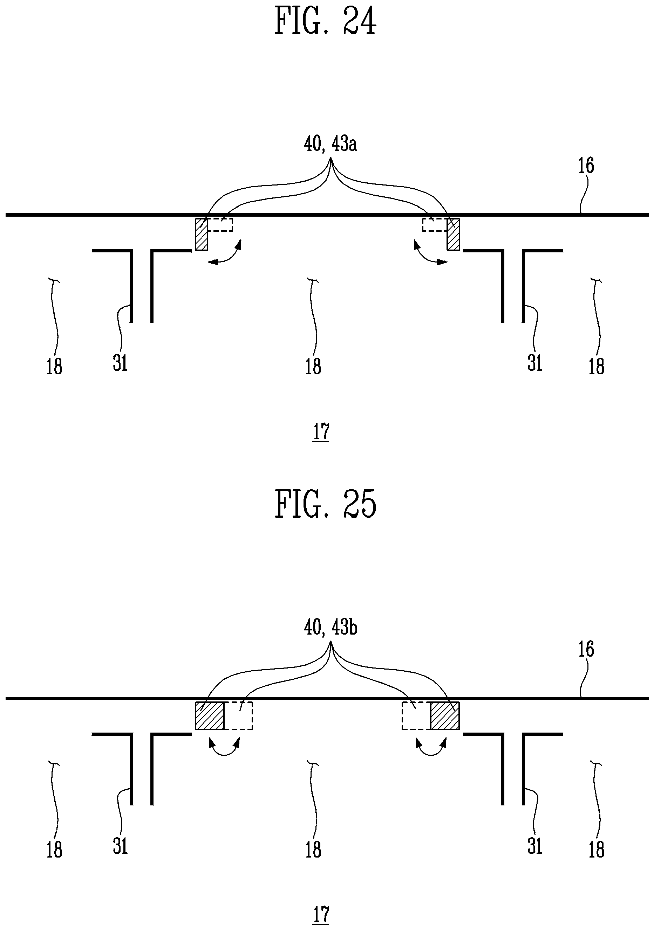

In addition, the location adjusting member 40 may be a hinged stopper 43a, 43b, 43c that rotates variously, as shown in FIGS. 24, 25, and 26A to 26C.

A pair of hinged stoppers 43a, 43b, and 43c are disposed in the horizontal direction between adjacent lower cell guides 31 in each of the plurality of cells 18, and a pair may be rotatably installed on the transverse bulkhead 16 near a location where the protruding member 120 passes.

The hinge stoppers 43a, 43b, and 43c may be rotated in one direction when the container stacking assistance device 100 is ascends or descends so that the protruding member 120 is mounted (shown as a solid line in the drawing), or may be rotated in the other direction so that the protruding member 120 does not interfere (shown as a dotted line in the drawing).

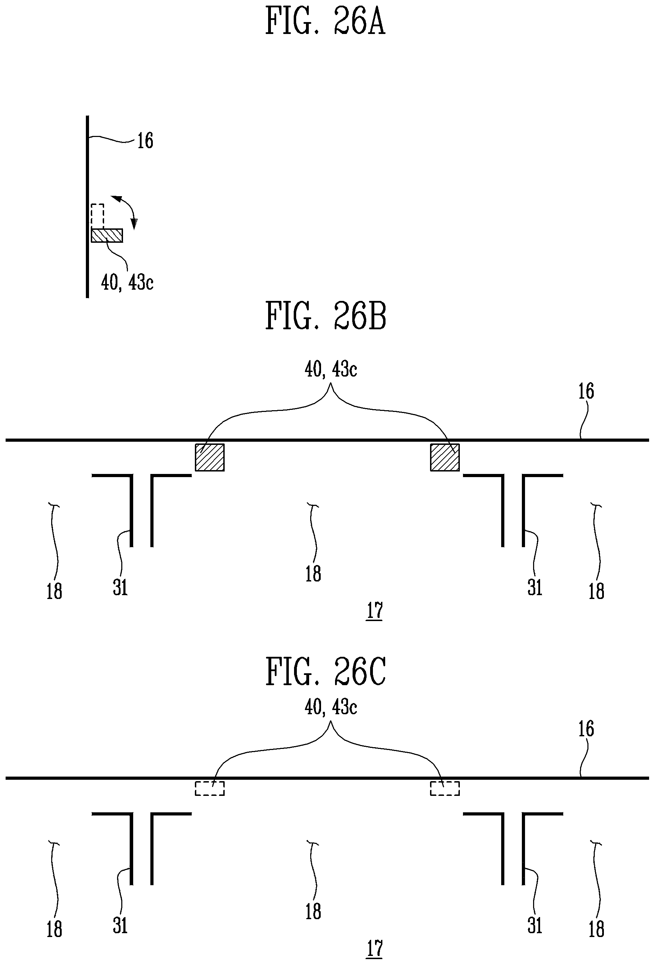

FIG. 26A is a side view of the hinged stopper 43c showing a rotated state, FIG. 26B is a plan view of the hinged stopper 43c showing a rotated state to mount the protruding member 120, and FIG. 26C is a plan view of the hinged stopper 43c showing a rotated state so that the protruding member 120 can pass therethrough.

As described above, the location adjusting member 40 may consist of various stoppers such as a fixed stopper 41, a sliding stopper 42, a hinged stopper 43a, 43b, 43c, and so on, and these various stoppers may be used in parallel.

For example, when the fixed stopper 41 is installed at an arbitrary location on the transverse bulkhead 16, the sliding stopper 42 or the hinged stopper 43a, 43b, 43c is installed in at least one or more places on the transverse bulkhead 16 above or below the fixed stopper 41, so that it is possible to install at least two or more container stacking assistance devices 100 in each of the plurality of cells 18 inside the cargo hold 17.

As another example, when the fixed stopper 41 is not installed at an arbitrary location on the transverse bulkhead 16, the sliding stopper 42 or the hinge stopper 43a, 43b, 43c is installed in at least one or more places on the transverse bulkhead 16, so that it is possible to install at least one or more container stacking assistance devices 100 in each of the plurality of cells 18 inside the cargo hold 17.

In the present disclosure, in the container carrier 1, lower cell guides 31 installed at regular intervals on the side surface of the transverse bulkhead 16 in the cargo hold 17, and the upper cell guides 32 installed on the upper and lower corresponding top bridges 20, 20-1, 20a, and 20b are connected. Being able to continuously load containers C from the bottom of the cargo hold 17 to the upper part of the upper deck 11 may be similar to the open-top of a conventional small container carrier,
but due to the role of the container stacking assistance device 100, 100a located in the center of the cell guides 31, 32, the top bridges 20, 20-1, 20a, 20b installed on the upper deck 11, and the upper cell guide 32, the container carrier 1 of the present disclosure may load a large amount of containers C in 13 tiers or more, including the amount loaded on the upper part of the upper deck 11 from the bottom of the cargo hold 17.

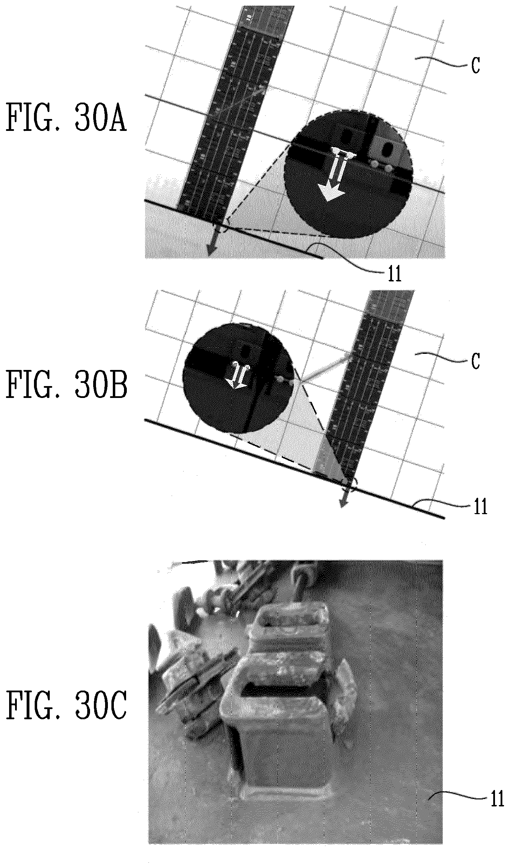

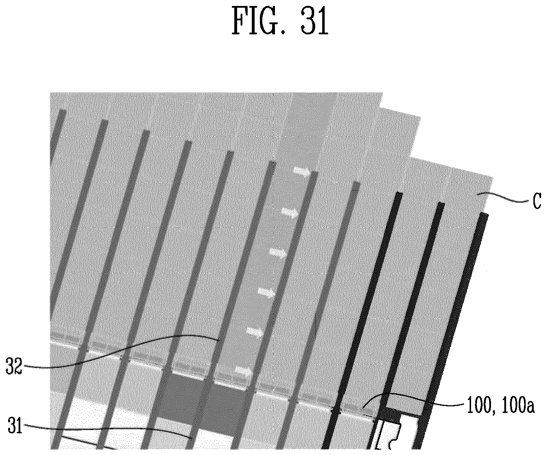

FIGS. 30 and 31 are diagrams for comparing a loading stability of a container in a conventional lashing system and a cell guide system of the present disclosure.

As described above, in the container carrier 1 of the present disclosure, the existing lashing system applied to the existing lashing bridge is omitted, and the cell guide system in which the upper cell guide 32 is provided on the top bridge 20 is applied, and hereinafter, by comparing and explaining the loading stability of the container C in the cell guide system of the present disclosure and the existing lashing system with reference to FIGS. 30 and 31, it is intended to reveal that the present disclosure is differentiated from the existing ones.

FIG. 30A shows a load acting on the socket foundation part during internal lashing in the existing lashing system applied to the existing lashing bridge, and it is shown that the compressive load due to self-weight and the transverse load due to hull motion act as an additional compressive load on the socket foundation part as a moment component.

FIG. 30B shows a load acting on the socket foundation part during external lashing in the existing lashing system applied to the existing lashing bridge, and it is shown that the compressive load due to self-weight and the transverse load due to hull motion act as an additional compressive load on the socket foundation part as a moment component, but the load is relatively reduced compared to internal lashing.

FIG. 30 C shows that in the existing lashing system applied to the existing lashing bridge, as shown in FIGS. 30A and B, the transient hull motion load acts as an incomplete element in the hatch cover and lashing system, causing hatch cover movement and relative displacement of the deck stool and hatch cover and the hull, thereby damaging the socket foundation part, and such damage to the socket foundation part is the main cause of container collapse and loss.

FIG. 31 shows, when the cell guide system of the present disclosure in which the upper cell guide 32 is provided on the top bridge 20 and the container stacking assistance device 100, 100a are applied, the load acting on the first and second fitting members 141 and 142 as socket foundation parts of the container stacking assistance device 100, 100a, and the compressive load due to self-weight and the transverse load caused by the hull motion are absorbed by the upper cell guide 32 so that no additional compressive force is generated, it is possible to secure the same margin as the general structural strength of the hull against the load caused by the hull motion, the effect of the relative displacement of the hull is insignificant, and damage of the loading container C due to load bias and domino collapse of the container C due to collapse of the lashing system may be fundamentally prevented.

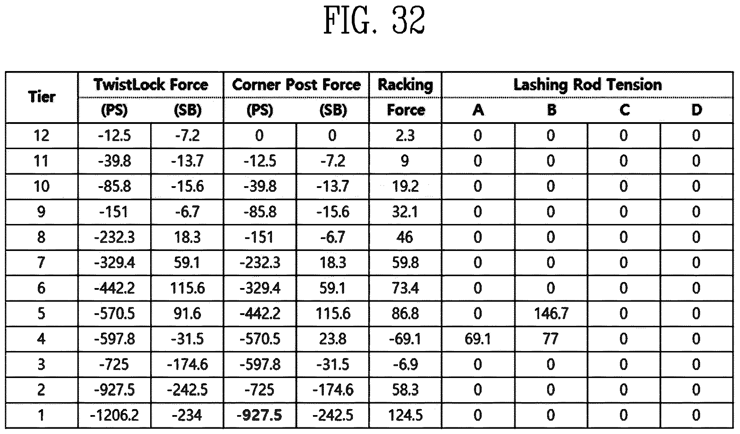

FIGS. 32 to 34 are tables for comparing a loading stability of a container in a conventional lashing system and a cell guide system of the present disclosure.

As described above, in the container carrier 1 of the present disclosure, the existing lashing system applied to the existing lashing bridge is omitted, and the cell guide system in which the upper cell guide 32 is provided in the top bridge 20 is applied, and hereinafter, by comparing the loading stability of the container C in the cell guide system of the present disclosure and the existing lashing system with reference to FIGS. 32 to 34, it will be revealed that the present disclosure is differentiated from the existing ones.

FIG. 32 shows, in the existing lashing system applied to the existing lashing bridge, when containers C are loaded in 12 tiers on top of the upper hatch cover of the upper deck of the hull and the containers C are lashed in 3 tiers using a lashing system, a table obtained by calculating racking force, corner post force, and twistlock force.

The racking force is the force that the loaded container C receives in the inclined direction under the influence of hull rolling, the corner post force is the upper and lower force applied to the four posts of the loaded container, and the twistlock force is the force applied to the twistlock connecting the containers by the motion of the hull.

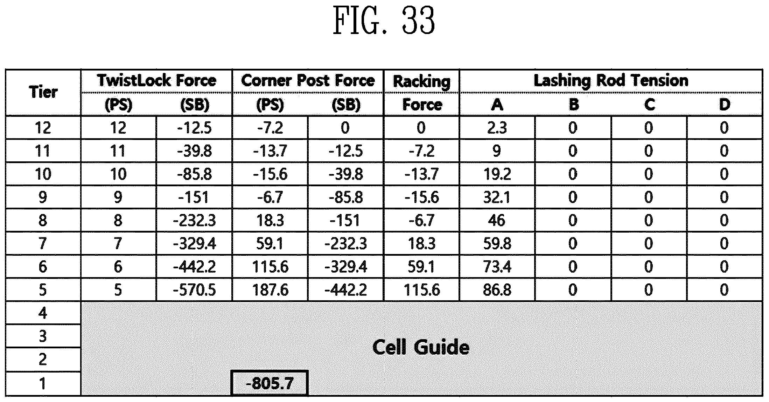

FIG. 33 shows, in the cell guide system of the present disclosure in which the upper cell guide 32 is provided on the top bridge 20, when containers C are loaded in 12 tiers on top of the container stacking assistance device 100 and the cell guide system is applied up to 4 tiers based on the container stacking assistance device 100, a table obtained by calculating racking force, corner post force, and twistlock fo rce.

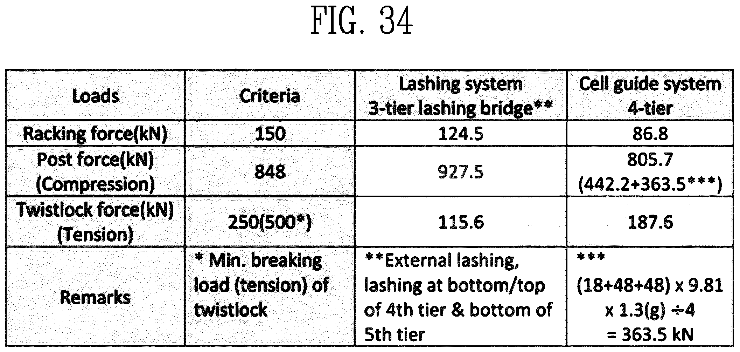

FIG. 34 shows a table of analysis results of racking force, corner post force, and twistlock force in the existing lashing system and the cell guide system of the present disclosure, based on the tables of FIGS. 32 and 33.

As shown in FIG. 34, as a result of analyzing the corner post force at the maximum value of motion acceleration when the loaded container C moves left and right during the rolling motion of the container carrier, compared to the allowable value of 848kN, in the case of the existing lashing system (container 3-tiers lashing bridge), at the lowermost end of the loaded container of the upper part of the hatch cover, 927.5 kN was found to exceed the allowable value, which could lead to a container collapse accident, whereas in the case of the cell guide system of the present disclosure (a structure that supports up to 4 tiers of containers loaded on the upper part of the container stacking assistance device of the present disclosure with cell guides), as the cell guide absorbs the motion acceleration up to the 4th tier of the loaded container, it may be seen that there is no risk of container collapse as the maximum value is 805.7kN which is below the allowable value.

In addition, although not shown, under the same conditions of loading containers C in 12 tiers and loading small containers (20ft containers) from 1 tier to 10 tiers, in the existing lashing system, there is no lashing when loading a 20ft container on the upper part of the hatch cover (when lashing is performed on only one side, a worse condition occurs than not lashing), whereas in the cell guide system of the present disclosure (structure supporting up to 5 tiers of containers with cell guides), the cell guide supports the container, so unlike the existing lashing system, it is possible to transfer the load in the pure transverse direction (same load transfer as inside the cargo hold), and at the allowable twist lock load (Min. breaking 500 kN (per person), 420 kN (shear)), the design safety factor of the present disclosure was able to obtain the effect of increasing about 8 times higher than the existing design safety factor. In other words, when the cell guide system of the present disclosure is applied, it is expected to secure superior stability compared to the existing lashing system in the 20ft container loading rough sea sailing condition.

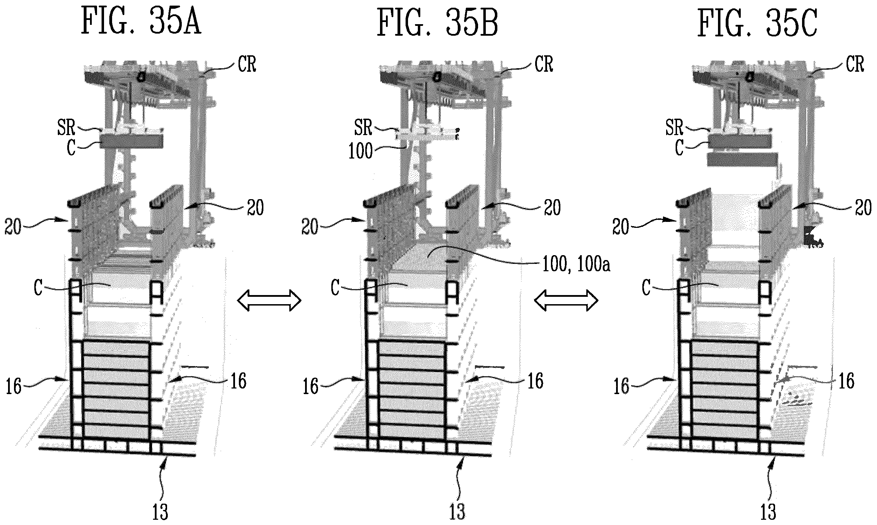

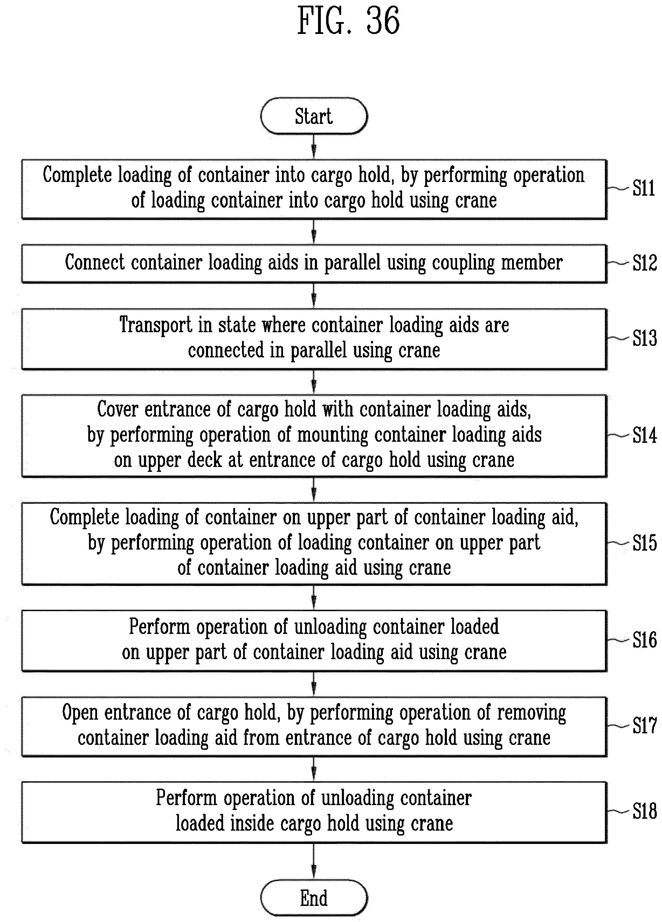

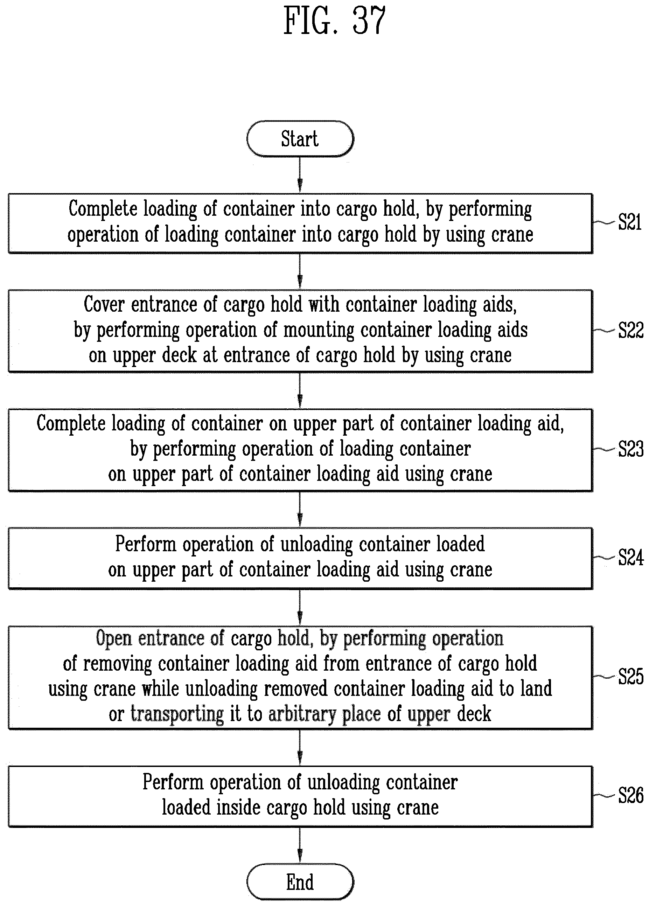

FIG. 35 is a diagram for illustrating a method of loading and unloading container using a container stacking assistance device in a container carrier in accordance with an embodiment of the present disclosure, FIG. 36 is a flowchart for illustrating a method of loading and unloading container using a container stacking assistance device in a container carrier in accordance with an embodiment of the present disclosure, and FIG. 37 is another flowchart for illustrating a method of loading and unloading container using a container stacking assistance device in a container carrier in accordance with an embodiment of the present disclosure.

Referring to FIGS. 35 and 36, a method of loading and unloading container using container stacking assistance devices 100 and 100a in the container carrier 1 according to an embodiment of the present disclosure will be described.

In the present embodiment, the container stacking assistance devices 100 and 100a used in the method of loading and unloading container may, as described above, so as to be applied to at least one cargo hold 17 of the container carrier 1 for loading a small container C or a large container C to load the container C on its upper side, include upper and lower frames 111 and 112 having a width and length of 1 to n times (n is a natural number) the width and length of the container C and having a flat cross section smaller than the entrance of the cargo hold 17, supports 113 provided in the height direction on the upper and lower frames 111 and 112, a protruding member 120 protruding to the outward direction from the upper and lower frames 111 and 112 or the support 113 so as to be mounted at an arbitrary location of the cargo hold 17, and a coupling member 170 connecting two or more upper and lower frames 111 and 112 disposed adjacent to each other.

Hereinafter, a method of loading and unloading containers in the container carrier 1 equipped with the container stacking assistance devices 100 and 100a will be described in detail.

First, the operation of loading the container C of the land 2 to the container carrier 1 using the crane CR will be described.

By performing the operation of loading the container C into the cargo hold 17 by using the crane CR, complete loading of the container C into the cargo hold 17 (step S11).

Connect the container stacking assistance devices 100, 100a in parallel using the coupling member 170 (step S12).

In the step S12, it is preferable to connect an odd number of container stacking assistance devices 100 and 100a connected in parallel in order to align the center of gravity when transporting them to the crane CR. In other words, when transporting the container stacking assistance devices 100 and 100a using the spreader SR attached to the crane CR, since the spreader SR is connected, among the container stacking assistance devices 100 and 100a connected in parallel, to the container stacking assistance device 100, 100a located in the center, it is necessary to connect them in odd numbers so that the center of gravity may be easily aligned during transport.

Transport in a state where the container stacking assistance devices 100 and 100a are connected in parallel using the crane CR (step S13).

By performing the operation of mounting container stacking assistance devices 100, 100a on the upper deck 11 at the cargo hold 17 entrance by using a crane CR, cover the cargo hold 17 entrance with the container stacking assistance devices 100, 100a (step S14).

In step S14, the container stacking assistance devices 100, 100a are transported to the cargo hold 17 of the container carrier 1 using the crane CR while stored on land 2.

By performing the operation of loading the container C on the upper part of the container stacking assistance device 100, 100a, loading of the container C on the upper part of the container stacking assistance device 100, 100a is completed (step S15).

Hereinafter, the operation of unloading the container C of the container carrier 1 to the land 2 using the crane CR will be described.

Perform the operation of unloading the container loaded on the upper part of the container stacking assistance device 100, 100a using the crane CR (step S16).

By performing the operation of removing the container stacking assistance device 100, 100a from the cargo hold 17 entrance using the crane CR, open the entrance of the cargo hold 17 (step S17).

In step S17, the container stacking assistance devices 100 and 100a may be transported to any place on the upper deck 11 in a parallel connected state to be stowed and stored on the upper deck 11, and transported to the land 2 to be stowed and stored on the land 2.

Perform the operation of unloading the container C loaded inside the cargo hold 17 using the crane CR (step S18).

In the present embodiment, when the container carrier 1 includes a hull 10 in which an upper deck 11, a side plating 12, and a bottom plating 13 form the exterior, a cargo hold 17 partitioned by a transverse bulkhead 16 inside the hull 10, lower cell guides 31 installed at regular intervals on the side of the transverse bulkhead 16, a top bridge 20 extending to the left and right edges of the upper deck 11 between the cargo holds 17 and disposed in a plurality of rows in the longitudinal direction of the hull 10, and upper cell guides 32 connected to each of the lower cell guides 31 and installed on both sides of the top bridge 20, the upper cell guide 32, in a state in which the container stacking assistance devices 100, 100a are connected in parallel using the coupling member 170 (step S12), may mount on the upper deck 11 at the cargo hold 17 entrance using a crane CR (step S14), or when removing from the entrance of the cargo hold 17 (step S17), may be inserted into the gap between the container stacking assistance devices 100, 100a connected in parallel to guide the ascent and descent.

Referring to FIGS. 35 and 37, another method of loading and unloading containers using the container stacking assistance device 100, 100a in the container carrier 1 according to an embodiment of the present disclosure will be described.

In the present embodiment, the container stacking assistance devices 100 and 100a used in the method of loading and unloading container may, as described above, so as to be applied to at least one cargo hold 17 of the container carrier 1 for loading a small container C or a large container C to load the container C on its upper side, include upper and lower frames 111 and 112 having a width and length of 1 to n times (n is a natural number) the width and length of the container C and having a flat cross section smaller than the entrance of the cargo hold 17, supports 113 provided in the height direction on the upper and lower frames 111 and 112, and a protruding member 120 protruding to the outward direction from the upper and lower frames 111 and 112 or the support 113 so as to be mounted at the cargo hold 17 entrance.

Hereinafter, a method of loading and unloading containers in the container carrier 1 equipped with the container stacking assistance devices 100 and 100a will be described in detail.

First, the operation of loading the container C of the land 2 to the container carrier 1 using the crane CR will be described.

By performing the operation of loading the container C into the cargo hold 17 by using the crane CR, complete loading of the container C into the cargo hold 17 (step S21).

By performing the operation of mounting container stacking assistance devices 100, 100a on the upper deck 11 at the cargo hold 17 entrance by using a crane CR, cover the cargo hold 17 entrance with the container stacking assistance devices 100, 100a (step S22).

In step S22, the container stacking assistance devices 100, 100a are transported to the cargo hold 17 of the container carrier 1 using the crane CR while stored on land 2, or transported to the cargo hold 17 of the container carrier 1 using the crane CR while stored at an arbitrary place on the upper deck 11 of the container carrier 1.

By performing the operation of loading the container C on the upper part of the container stacking assistance device 100, 100a, loading of the container C on the upper part of the container stacking assistance device 100, 100a is completed (step S23).

Hereinafter, the operation of unloading the container C of the container carrier 1 to the land 2 using the crane CR will be described.

Perform the operation of unloading the container loaded on the upper part of the container stacking assistance device 100, 100a using the crane CR (step S24).

By performing the operation of removing the container stacking assistance device 100, 100a from the cargo hold 17 entrance using the crane CR while unloading the removed container stacking assistance device 100, 100a to the land 2 or transporting to an arbitrary place of the upper deck 11, open the entrance of the cargo hold 17 (step S25).

In step S25, the container stacking assistance device 100, 100a may be transported to an arbitrary place on the upper deck 11 to be stowed and stored on the upper deck 11, and transported to the land 2 to be stowed and stored on the land 2.

Perform the operation of unloading the container C loaded inside the cargo hold 17 using the crane CR (step S26).

In the present embodiment, when the container carrier 1 includes a hull 10 in which an upper deck 11, a side plating 12, and a bottom plating 13 form the exterior, a cargo hold 17 partitioned by a transverse bulkhead 16 inside the hull 10, lower cell guides 31 installed at regular intervals on the side of the transverse bulkhead 16, a top bridge 20 extending to the left and right edges of the upper deck 11 between the cargo holds 17 and disposed in a plurality of rows in the longitudinal direction of the hull 10, and upper cell guides 32 connected to each of the lower cell guides 31 and installed on both sides of the top bridge 20, in step S25 of opening the entrance of the cargo hold 17, the container stacking assistance device 100, 100a may be stored by being stowed on the upper deck 11 between the top bridges 20 facing each other in the front-rear direction, or may be stored by being stowed on the land 2.

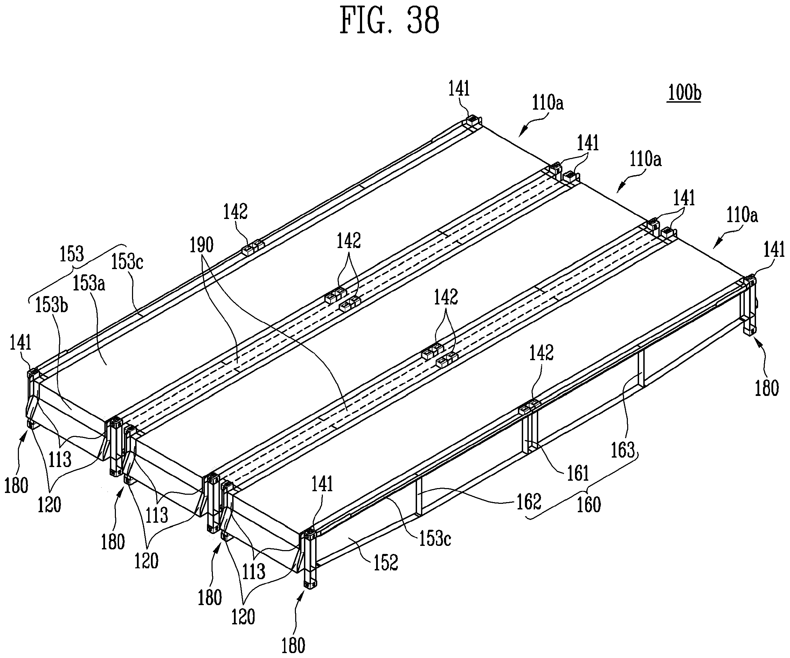

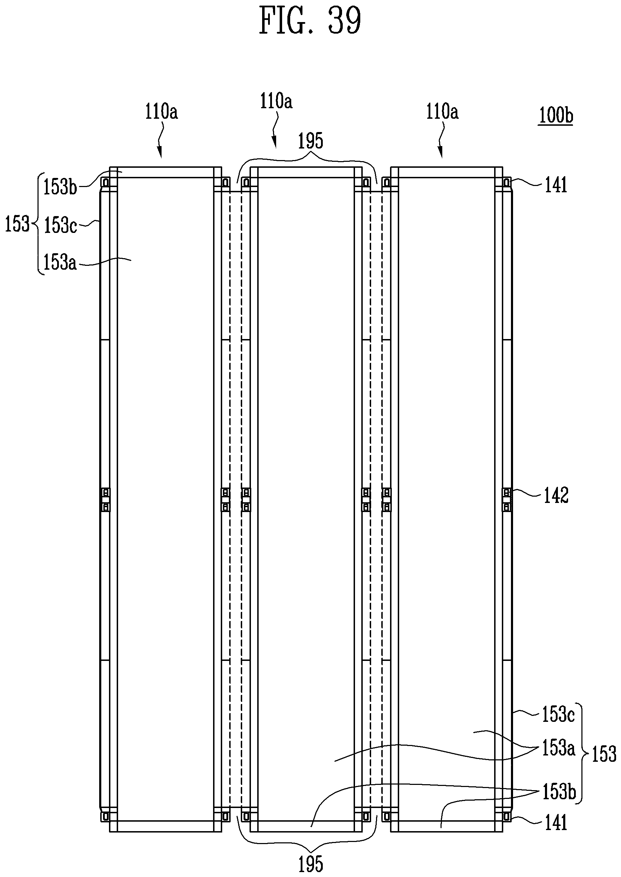

FIGS. 38 and 39 are perspective views and plan views illustrating another embodiment of the container stacking assistance device of FIGS. 17 and 18.

As shown in FIGS. 38 and 39, in a container stacking assistance device 100b according to another embodiment, compared with an open-type container stacking assistance device 100 in which left and right are closed with plates 151 and 152 and top, bottom, front and rear are open shown in FIG. 17, or a closed-type container stacking assistance device 100a in which left and right are sealed with plates 151 and 152 and the upper part and front and rear sides are sealed with watertight members 153 shown in FIG. 18, the basic configuration may be the same or similar, but it may be structurally differentiated in that it is a multi-type container stacking assistance device formed by disposing at least two or more open-type container stacking assistance devices 100 or closed-type container stacking assistance devices 100a in the width direction.

In other words, assuming that the open-type container stacking assistance device 100 or the closed-type container stacking assistance device 100a is a single-type for loading containers C in one row, the container stacking assistance device 100b according to another embodiment may be defined as a multi-type configured to load at least two or more rows of containers C in the width direction.

The container stacking assistance device 100b according to another embodiment may include a main body consisting of at least two or more unit bodies 110a disposed in the width direction, and connecting parts 190 connecting between neighboring unit bodies 110a, and a protruding member 120 protruding to the outward direction from each unit body 110a so as to be mounted at an arbitrary location of the cargo hold 17.

In the above, as the unit body 110a has the same or similar basic configuration as the main body 110 of the open-type container stacking assistance device 100 or the closed-type container stacking assistance device 100a, like reference numerals are used for like configurations, and accordingly, a detailed description of each of the same components will be omitted here to avoid duplication of description, and configurations that vary according to multi-type configurations will be described in detail.

In the unit body 110a, an upper frame 111 and a lower frame 112 having a flat cross section whose width corresponds to the width of the container C and whose length is smaller than the entrance of the cargo hold 17, and a support 113 provided in the height direction between the upper frame 111 and the lower frame 112 may be coupled to each other so that the overall shape may be a rectangular box shape. Here, the support 113 connects each of the square corners of the unit body 110a, and the protruding member 120 protrudes to the outward direction from the lower end of each of the support 113.

The unit body 110a may be disposed at least two or more at intervals corresponding to the width of the lower cell guide 31.

The connecting part 190 has a width corresponding to the width of the lower cell guide 31 and may connect between neighboring unit bodies 110a.

When the unit body 110a is the same as or similar to the configuration of the main body 110 of the above-described open-type container stacking assistance device 100, the connecting part 190 may be welded by attaching a member of the area unit to the first major axis frame 111a in the neighboring unit body 110a, or may be composed of two facing first major axis frames 111a and one component. Although not shown in the drawing, in order to reinforce structural rigidity, the lower part of the connecting part 190 (inside the container stacking assistance device 100b) may be configured with a reinforcing structure such as a lengthwise or widthwise reinforcing member, for example, a stiffener.

In addition, when the unit body 110a is the same as or similar to the configuration of the main body 110 of the above-described closed-type container stacking assistance device 100a, the connecting part 190 may be welded by attaching a member of the area unit to the first major axis frame 111a in the neighboring unit body 110a, or may be formed of a single plate when looking down the upper surface of the container stacking assistance device 100b from the upper part to the lower part. Although not shown in the drawing, in order to reinforce structural rigidity, the lower part of the connecting part 190 and the third watertight plate 153c (inside the container stacking assistance device 100b) may be configured with a reinforcing structure such as a lengthwise or widthwise reinforcing member, for example, a stiffener.

In the aforementioned closed-type container stacking assistance device 100a, the upper part and front and rear sides of the main body 110 are sealed with a watertight member 153, and in the container stacking assistance device 100b according to another embodiment, the upper part and front and rear sides of the unit body 110a may be sealed with a watertight member 153 as well.

The watertight member 153 of the container stacking assistance device 100b according to another embodiment may include a first watertight plate 153a installed on each upper part of the unit body 110a, a second watertight plate 153b installed on the front and rear sides of each unit body 110a, and whose lower end part protrudes outward in correspondence with the shape of the protruding member 120 and is located on the upper deck 11 at the entrance of the cargo hold 17, and a third watertight plate 153c installed at a certain height along the upper side edges of each of the unit bodies 110a, through which water accumulated on the first watertight plate 153a of each of the unit body 110a is guided to the second watertight plate 153b of each of the unit body 110a. When the watertight member 153 of the container stacking assistance device 100b according to another embodiment is configured as such, the connecting part 190 may further include a watertight plate connecting between the first watertight plate 153a of the neighboring unit body 110a.

The watertight plate of the connecting part 190 may be separately provided to connect between the first watertight plates 153a of the neighboring unit bodies 110a, or may be integrally formed by extending the first watertight plate 153a.

In the above, although it has been described that the third watertight plate 153c is installed at a certain height along both upper side edges of each unit body 110a, in the unit body 110a disposed at least two or more in the width direction, it may be formed on the upper left edge of the unit body 110a disposed on the left side and the upper right edge of the unit body 110a disposed on the right side. In other words, the third watertight plate 153c may be installed at a certain height along both edges of the upper part of the main body formed by disposing at least two or more unit bodies 110a in the width direction.

In addition, the container stacking assistance device 100b according to another embodiment may further include guide grooves 195 formed to be recessed inward at a certain depth from both sides of the connecting part 190.

The guide groove 195 may be formed to be slidable in the lower cell guide 31 or the upper cell guide 32 connected to the lower cell guide 31 and extending a certain length to the upper part of the upper deck 11, and may guide the ascent and descent of the container stacking assistance device 100b.

In addition, the container stacking assistance device 100b according to another embodiment may further include a fitting member for fixing the container C provided on the upper surface of the upper frame 111 and loaded on the upper frame 111.

The fitting member may be the same or similar to the fitting member of the open-type container stacking assistance device 100 or the closed-type container stacking assistance device 100a described above.

In other words, the fitting member includes the first fitting members 141 for fixing the large container C and the second fitting members 142 for fixing the small container C, wherein the second fitting members 142 may share at least a part of the first fitting members 141 to fix the small container C.

The container stacking assistance device 100b according to another embodiment configured as described above is formed by connecting at least two or more unit bodies 110a disposed in the width direction by a connecting part 190, wherein the unit body 110a is preferably disposed in an odd number so that the first and second fitting members 141 and 142 provided in the unit body 110a at the center may be used for lifting when transported by the crane CR.

As described above, in the present embodiment, by providing the top bridges 20, 20-1, 20a, 20b provided with the upper cell guide 32, since the container C may be supported and fixed by the upper cell guide 32, the existing lashing system (fastening devices such as lashing rods and lashing bars) may be omitted, and as a result, it is possible to reduce material costs as well as time and money spent on lashing work. In addition, it is possible to solve the problem that the loaded container C is damaged or lost by directly supporting the container C on the upper part of the upper deck 11 during the operation of the container carrier 1, and in addition, since the upper cell guides 32 provided on the top bridges 20, 20-1, 20a, and 20b and the lower cell guides 31 installed on the transverse bulkhead 16 are connected, respectively, when loading and unloading the container C, continuous loading or unloading may be possible without additional work such as hatch cover mounting or lashing work.

In addition, by configuring the container stacking assistance device 100, 100a, 100b to be mountable at the cargo hold 17 entrance of the container carrier 1, the present embodiment not only contributes to the longitudinal strength of the hull 10 in the state of being mounted at the cargo hold 17 entrance, but also transmits the loading load of the container C loaded on the upper part of the upper deck to the hull 10, so a large amount of containers C in 13 or more tiers, including the amount loaded on the upper part of the upper deck 11 from the bottom of the cargo hold 17 can be stowed.

In addition, in the present embodiment, by configuring the container stacking assistance device 100, 100a, 100b so that one or more can be transported by the crane CR and stowed on their own, it may be easy to handle for mounting at the cargo hold 17 entrance of the container carrier 1, convenient to store on the container carrier 1 or the land 2, and easy to transport by the transport vehicle TR on the land 2.

In addition, in the present embodiment, since the container stacking assistance device 100, 100a, 100b are provided with the reinforcing frame 130, the first plate 151 and the second plate 152, and all or part of the reinforcing member 160, it is possible to secure rigidity capable of supporting the load of the container C loaded on the upper part.

In addition, in the present embodiment, by providing the first and second fitting members 141 and 142 corresponding to the corner casting of the container C on the upper surface of the container stacking assistance device 100, 100a, 100b, the containers loaded on the upper surface may be safely fixed, but also 20 ft small containers C and 40 ft large containers C may be mixed and stowed.

In addition, in the present embodiment, by forming the top bridges 20, 20-1, 20a, 20b as a cell guide system in which the lashing bridge is omitted and the upper cell guide 32 and the lower cell guide 31 installed on the transverse bulkhead 16 are connected to each other, not only can the width be minimized compared to the existing lashing bridge, but also the complex structure in which the existing lashing bridge is installed can be formed into a simple structure, and since the width of the upper deck 11 between the cargo holds 17 can be minimized compared to the existing container carrier with the existing lashing bridge installed, it is possible to secure design flexibility compared to the same specifications of the container carrier 1 (optimization possible due to the elimination of hull length and other lashing systems) or to increase the shipping capacity of the container C.

In addition, in the present embodiment, by providing a location adjusting member 40 for adjusting the location of the container stacking assistance device 100, 100a, 100b, one or more container stacking assistance devices 100, 100a, 100b may be installed at an arbitrary location inside the cargo hold 17, thereby increasing the flexibility of loading the container C.

In addition, in the present embodiment, by providing the hull extension part 50 protruding to the left and right sides of the hull 10, it is possible to additionally load the container C into the hull extension part 50, and not only can the loading quantity of containers C be increased, but also the possibility of invasion of green water can be reduced by making the outer side plating 12a part constituting the hull extension part 50 have a certain inclination to the outside.

In addition, in the present embodiment, the bending moment of the hull 10 may be improved by installing the reinforcing bulkhead 60 at the edge of the upper deck 11 on the left and right sides of the hull 10.

In addition, in the present embodiment, by providing the water discharge port 70 to penetrate the side plating 12 of the double hull structure to the outside in the freeboard deck 19, providing a support structure 80 for supporting the container C at regular intervals on the bottom of the inner bottom plating 13b, and providing the drainage system 90 on the bottom plating 13, water introduced through the cargo hold 17 entrance of the container carrier 1 may be easily treated, and the container C on the bottom of the cargo hold 17 may be prevented from being submerged in water.

In the above, although the present disclosure has been described centering on the embodiments of the present disclosure, this is merely exemplary and does not limit the present disclosure, and those skilled in the art to which the present disclosure belongs will know that various combinations or modifications and applications not exemplified in the embodiments are possible without departing from the essential technical content of the present embodiment. Therefore, technical contents related to modifications and applications that can be easily derived from embodiments of the present disclosure should be construed as being included in the present disclosure.

### [Description of Symbols]

| | | | |
|---|---|---|---|
| 1: | Container carrier | 2: | Land |
| 10: | Hull | 11: | Upper deck |
| 11a: | Extension deck | 12: | Side plating |
| 12a: | Outer side plating | 12a1: | Overhang outer plating |
| 12a2: | Vertical outer plating | 12b: | Inner side plating |
| 13: | Bottom plating | 13a: | Outer bottom plating |
| 13b: | Inner bottom plating | 14: | Bow |
| 15: | Stern | 16: | Transverse bulkhead |
| 17: | Cargo hold | 18: | Cell |
| 19: | Freeboard deck | 20, 20-1, 20a, 20b: | Top bridge |
| 21: | Vertical member | 21a: | Outer vertical member |
| 21b: | Intermediate vertical member | 22: | Horizontal member |
| 23: | Oblique member | 24: | Plate member |
| 31: | Lower cell guide | 32: | Upper cell guide |
| 40: | Position adjustment member | 41: | Fixed stopper |
| 42: | Sliding stopper | 42A: | Rail |
| 43A, 43B, 43C: | Hinged stopper | 50: | Hull extension part |
| 60: | Reinforcing bulkhead | 70: | Water discharge port |
| 80: | Support structure | 90: | Drainage system |
| 91: | Bilge well | 92: | Drainage hole |
| 93: | Pipe duct | | |
| 100, 100A, 100B: | Container stacking assistance device | | |
| 110, 110a: | Main body | 111: | Upper frame |
| 111a: | First major axis frame | 111b: | First minor axis frame |
| 112: | Lower frame | 112a: | Second major axis frame |
| 112b: | Second minor axis frame | 113: | Support |
| 120: | Protruding member | 130: | Reinforcing frame |
| 131: | First horizontal stiffener | 132: | Second horizontal stiffener |
| 133: | First vertical stiffener | 141: | First fitting member |
| 142: | Second fitting member | 151: | First plate |
| 152: | Second plate | 153: | Watertight member |
| 153a: | First watertight plate | 153b: | Second watertight plate |
| 153c: | Third watertight plate | 160: | Reinforcing member |
| 161: | Intermediate reinforcing member | | |
| 162: | First reinforcing member | | |
| 163: | Second reinforcing member | 170: | Coupling member |
| 171: | First coupling member | 172: | Second coupling member |
| 180: | Stowage member | 181: | Stowage leg |
| 182: | Third fitting member | 190: | Connecting part |
| 195: | Guide groove | | |
| C: | Container | A: | Cabin |
| I: | Engine casing | R: | Engine room |
| CR: | Crane | SR: | Spreader |
| TR: | Transport vehicle | DL: | Draft line |

## Claims

1. A container carrier comprising:
a hull comprising a side plating forming a double hull structure with an outer side plating and an inner side plating, a bottom plating forming a double bottom structure with an outer bottom plating and an inner bottom plating, and an upper deck;
a cargo hold partitioned by transverse bulkheads inside the hull;
lower cell guides installed at regular intervals on sides of the transverse bulkheads;
top bridges installed extending to left and right edges of the upper deck between the cargo holds and disposed in a plurality of rows in a longitudinal direction of the hull; and
upper cell guides installed on both sides of the top bridge, each of the upper cell guides being connected to each of the lower cell guides to be integrally formed.

2. The container carrier of claim 1, wherein the upper cell guide is installed up to an uppermost part of the top bridge, or installed lower or higher than the uppermost part.

3. The container carrier of claim 2, wherein at least one of a lashing eye, a lashing ring, a lashing plate, a plug, and a cone, which are fixing devices of a lashing system, is additionally disposed at the uppermost part of the top bridge.

4. The container carrier of claim 1, wherein the top bridge comprises a combination of a plurality of vertical members and a plurality of horizontal members,
two outer vertical members of the plurality of vertical members disposed on the upper deck on each of left and right sides of the hull are disposed at an interval corresponding to a width of a small container or a large container, and
a plurality of intermediate vertical members disposed between the outer vertical members of the plurality of vertical members are disposed at intervals corresponding to twice the width of the small container or the large container.

5. The container carrier of claim 4, wherein the top bridge further comprises a plurality of oblique members installed to reduce a load applied to the plurality of vertical members and the plurality of horizontal members, and
wherein the plurality of oblique members are installed with an upward slope in a center direction of the hull from a lower end of each of the two outer vertical members disposed on the upper deck on each of the left and right sides of the hull and a lower end of at least one intermediate vertical member of the plurality of intermediate vertical members.

6. The container carrier of claim 4, wherein the top bridge further comprises a plurality of plate members installed to reduce a load applied to the plurality of vertical members and the plurality of horizontal members, and
wherein the plurality of plate members are installed between one intermediate vertical member adjacent to each of the outer vertical members among the plurality of intermediate vertical members, and between two intermediate vertical members disposed in a center part of the hull among the plurality of intermediate vertical members, respectively.

7. The container carrier of claim 4, wherein the upper cell guides are disposed between each of the outer vertical members, the plurality of intermediate vertical members, and the plurality of intermediate vertical members, and configured to guide ascent and descent of the small container or the large container.

8. The container carrier of claim 1, further comprising:
a drainage hole installed through the side plating of the double hull structure to an outside on a freeboard deck so that water is drained from a dock to the outside.

9. The container carrier of claim 1, further comprising:
a drainage system installed on the bottom plating, to drain water infiltrating through an entrance of the cargo hold to an outside,
wherein the drainage system is configured to collect water entering through a drainage hole formed in the inner bottom plating in a bilge well formed in a box shape under the inner bottom plating at lower ends of left and right sides of the transverse bulkhead, and drain the water collected in the bilge well by a bilge pump of an engine room through a drainage pipe of a pipe duct.

10. The container carrier of claim 1, further comprising:
a container stacking assistance device applied to at least any one of the cargo hold so that a container having at least one or more specifications is loaded on its upper side; and
a location adjusting member disposed in a horizontal direction between the neighboring lower cell guides in each of a plurality of cells inside the cargo hold, and installed in at least one or more places at an arbitrary location in a vertical direction of the transverse bulkhead partitioning the cargo hold.

11. The container carrier of claim 10, wherein the container stacking assistance device comprises:
a frame having a width and length of 1 to n times (n is a natural number) to a width and length of the container, while having a flat cross section smaller than an entrance of the cargo hold;
a support provided in a height direction on the frame; and
a protruding member protruding to an outward direction from the frame or the support so as to be capable of being mounted at an arbitrary location of the cargo hold,
wherein the upper deck of the entrance of the cargo hold has a groove through which the protruding member passes at a portion where the protruding member is mounted, and
wherein the location adjusting member mounts the container stacking assistance device passing through the groove formed in the upper deck and descended inside the cargo hold.

12. The container carrier of claim 1, further comprising:
support structures disposed at predetermined intervals on a bottom surface of the cargo hold to support the container upwardly and spaced apart,
wherein the support structures allow a flow path for foreign substances flowing into the cargo hold to be formed, between the bottom surface of the cargo hold and the container of a lowermost layer.

13. A method of loading and unloading container for a container carrier in which a container stacking assistance device comprising a frame having a width and length of 1 to n times (n is a natural number) to a width and length of a container, while having a flat cross section smaller than an entrance of a cargo hold, a support provided in a height direction on the frame, and a protruding member protruding to an outward direction from the frame or the support so as to be capable of being mounted at an arbitrary location of the cargo hold, is applied to at least one of the cargo hold to load the container, comprising:
by performing an operation of loading the container into the cargo hold by using a crane, completing the loading of the container into the cargo hold;
by performing an operation of mounting the container stacking assistance device on an upper deck of an entrance of the cargo hold using the crane, covering the entrance of the cargo hold with the container stacking assistance device;
by performing an operation of loading the container on an upper part of the container stacking assistance device using the crane, completing the loading of the container on the upper part of the container stacking assistance device;
performing an operation of unloading the container loaded on the upper part of the container stacking assistance device using the crane;
by performing an operation of removing the container stacking assistance device from the entrance of the cargo hold using the crane, opening the entrance of the cargo hold; and
performing an operation of unloading the container loaded inside the cargo hold using the crane.

14. The method of loading and unloading container of claim 13, wherein the mounting of the container stacking assistance device on the upper deck of the entrance of the cargo hold using the crane comprises transporting the container stacking assistance device to the cargo hold of the container carrier using the crane in a state where it is stored on land, or to the cargo hold of the container carrier using the crane in a state where it is stored at an arbitrary place of the upper deck of the container carrier, and
the performing of the operation of removing the container stacking assistance device from the entrance of the cargo hold using the crane comprises unloading the container stacking assistance device onto land or transporting the container stacking assistance device to the arbitrary place of the upper deck.

15. The method of loading and unloading container of claim 13, wherein the container carrier comprises:
a hull, an exterior of the hull being formed by the upper deck, a side plating, and a bottom plating;
cargo holds partitioned by transverse bulkheads inside the hull;
lower cell guides installed at regular intervals on sides of the transverse bulkheads;
a plurality of top bridges installed extending to left and right edges of the upper deck between the cargo holds and disposed in a longitudinal direction of the hull; and
upper cell guides connected to each of the lower cell guides, and installed on both sides of the top bridge, and
the container stacking assistance device is stowed and stored between the top bridges facing in a front-rear direction on the upper deck in the opening of the entrance of the cargo hold.

16. The method of loading and unloading container of claim 13, further comprising:
after the completing of the loading of the container into the cargo hold by performing the operation of loading the container into the cargo hold by using the crane,
connecting the container stacking assistance devices in parallel using a coupling member; and
transporting the container stacking assistance devices in a state where the container stacking assistance devices are connected in parallel using the crane.

17. The method of loading and unloading container of claim 16, wherein, in the connecting of the container stacking assistance devices in parallel using the coupling member,
the number of the container stacking assistance devices connected in parallel is an odd number to align a center of gravity when transporting them by the crane, and the center of gravity is aligned during transport by connecting a spreader attached to the crane to a container stacking assistance device located in a center among the odd number of connected container stacking assistance devices.

18. The method of loading and unloading container of claim 16, wherein the container carrier comprises:
a hull, an exterior of the hull being formed by the upper deck, a side plating, and a bottom plating;
a plurality of top bridges installed extending to left and right edges of the upper deck between the cargo holds and disposed in a longitudinal direction of the hull; and
upper cell guides connected to respective lower cell guides in the cargo hold, and installed on both sides of the top bridge,
wherein the upper cell guides mounts the container stacking assistance devices on the upper deck of the entrance of the cargo hold using the crane in a state in which the container stacking assistance devices are connected in parallel using the coupling member, or are inserted into gaps between the container stacking assistance devices connected in parallel to guide ascent and descent when they are removed from the entrance of the cargo hold.

19. A container carrier that loads and unloads the container, and mounts the container stacking assistance device on the upper deck of the entrance of the cargo hold, or removes the container stacking assistance device from the entrance of the cargo hold according to the method of loading and unloading container of claim 13.
